# EUROPEAN PATENT APPLICATION

(11) **EP 4 640 996 A1**
(43) Date of publication of application: **29.10.2025**
(21) Application number: 24779958.8
(22) Date of filing: 22.03.2024
(51) Int. Cl.: F01N 3/20, F02D 19/06, F02D 41/22, F02D 45/00

(54) **CATALYST DETERIORATION DIAGNOSTIC DEVICE FOR FLEXIBLE FUEL ENGINE**

(30) Priority: 24.03.2023 WO PCT/JP2023/011953
(71) Applicant: Yamaha Hatsudoki Kabushiki Kaisha, Iwata-shi, Shizuoka 438-8501 (JP)
(72) Inventor: SHIMIZU, Yuta, Iwata-shi, Shizuoka 438-8501 (JP)
(74) Representative: Stöckeler, Ferdinand
(86) International application number: PCT/JP2024/011276
(87) International publication number: WO 2024/203840

(57) **Abstract**

A catalyst deterioration diagnostic device (1) for a flexible fuel engine generates a single set of diagnostic data based on a signal of a downstream oxygen sensor (113) in a diagnosis period (Pc), (i) even when at least one of the cycle (Cdc) or amplitude (Adc) of the signal of the downstream oxygen sensor is different due to a difference in the mixture ratio of flexible fuel, (ii) even when the number of reversals of the signal of the downstream oxygen sensor in the diagnosis period is smaller than the number of reversals of the signal of the upstream oxygen sensor, when a catalyst (111) is deteriorated, and (iii) even when the signal of the downstream oxygen sensor is reversed when the catalyst is normal, and diagnoses the state of deterioration of the catalyst based on at least one set of the diagnostic data generated based on a signal of the downstream oxygen sensor in a total diagnosis period (Pt) that includes at least one diagnosis period and has a length equal to or longer than any two cycles of the signal of the upstream oxygen sensor.

## Description

### [Technical Field]

The present teaching relates to a catalyst deterioration diagnostic device for a flexible fuel engine, which is configured to diagnose the state of deterioration of a catalyst in an engine using different types of flexible fuels which are different in the mixture ratio of gasoline and alcohol.

### [Background Art]

An engine capable of using fuel in which gasoline is mixed with alcohol has been known as described in, for example, Patent Literatures 1 and 2.

Patent Literature 1 recites that the oxygen storage capacity of a catalyst is measured and the deterioration of the catalyst is diagnosed based on the measurement result. Patent Literature 1 recites that, when fuel (hereinafter, alcohol-mixed fuel) in which alcohol (mainly ethanol) is mixed with gasoline that is reference fuel is used in a gasoline engine, a measurement value of the oxygen storage capacity of a catalyst at the time of diagnosis of deterioration is different from a measurement value when fuel that is 100% gasoline (hereinafter, gasoline fuel) is used. The document recites a guess of the reason of this change.

"The stoichiometric air-fuel ratio of gasoline fuel is, for example, 14.6. On the other hand, the stoichiometric air-fuel ratio of 100% alcohol fuel is 9.0 in a case of, for example, ethanol. As such, the higher the alcohol concentration of the fuel is, the lower the stoichiometric air-fuel ratio is and the larger the required fuel injection amount is.

In fact, in stoichiometric air-fuel ratio feedback control, the air-fuel ratio of exhaust gas flowing into a catalyst is detected, to be more precise, the oxygen concentration of the exhaust gas is detected by an air-fuel ratio sensor, and control is performed so that the detected oxygen concentration corresponds to the gasoline stoichiometry, and when alcohol fuel is further supplied, the oxygen concentration detected by the air-fuel ratio sensor increases and the detected air-fuel ratio shifts to the lean side, at least partially because the alcohol includes oxygen. On this account, the fuel injection amount is adjusted to the increasing side, and in the end the oxygen concentration detected by the air-fuel ratio sensor becomes to correspond to the gasoline stoichiometry. The oxygen concentration in this case corresponds also to the stoichiometry of the alcohol fuel. As such, the air-fuel ratio of the exhaust gas is controlled to the stoichiometric air-fuel ratio corresponding to the alcohol fuel in use. However, even if the air-fuel ratio of the gas flowing into the catalyst is controlled to the stoichiometric air-fuel ratio of the alcohol fuel, a component of the exhaust gas flowing into the catalyst causes a different reaction from the gasoline stoichiometry on the surface of the catalyst. In other words, being different from the stoichiometry of the gasoline fuel, the stoichiometry of the alcohol fuel is not always an optimal gas state for the catalyst. This is presumably a reason why a measurement value of the oxygen storage capacity is different at the time of diagnosis of deterioration. In addition to the above, when alcohol fuel is used, the fuel injection amount is large compared to a case where gasoline fuel is used. Because the fuel injection amount is used for measuring the oxygen storage capacity, this is presumably the main reason why a measurement value of the oxygen storage capacity is different at the time of diagnosis of deterioration. Through a test, the present inventors found that the measurement value of the oxygen storage capacity increases when alcohol fuel is used, compared to a case where gasoline fuel is used."

The problem caused by a greater change in a measurement value of the oxygen storage capacity when alcohol fuel is used, compared to a case where gasoline fuel is used is described as below in Patent Literature 1.

"In this way, as the measurement value of the oxygen storage capacity increases due to a change in fuel property, i.e., an increase in alcohol concentration, the diagnosis of deterioration cannot be accurately done. Moreover, a catalyst which is deteriorated but is at around the border (criteria) between normal and deterioration may be erroneously diagnosed to be normal. As such, the diagnosis may not be accurately done."

To solve such problems, in Patent Literature 1, the accuracy of estimation of the fuel property is improved and the measurement value of the oxygen storage capacity is corrected based on the estimated fuel property, in order to improve the accuracy of the diagnosis of deterioration of the catalyst.

Patent Literature 2 proposes to detect abnormality of an internal combustion engine (engine) based on an output value of an air-fuel ratio sensor provided on an exhaust passage of the internal combustion engine. The detection of abnormality of the internal combustion engine recited in Patent Literature 2 encompasses diagnosis of the state of deterioration of a catalyst. Problems that occur when fuel in which gasoline is mixed with alcohol is used are described as below in Patent Literature 2.

"Gasoline and alcohol are different in fuel property. For example, the stoichiometric air-fuel ratio of alcohol is smaller than that of gasoline. On this account, when the air-fuel ratio is controlled to a target value (e.g., the stoichiometric air-fuel ratio), alcohol is larger than gasoline in the correction amount of the air-fuel ratio. As a result, when the air-fuel ratio is forcibly changed in the above-described diagnosis of abnormality, it is considered that the time of convergence to the target air-fuel ratio is different between alcohol and gasoline, i.e., the time is longer in alcohol than in gasoline. In such a case, a change in the output level of the air-fuel ratio sensor differs in accordance with the fuel property. As a result, the occurrence of abnormality may be erroneously detected even if the engine is actually normal. Furthermore, the occurrence of abnormality may not be detected even if an abnormality is occurring in the engine."

To solve this problem, Patent Literature 2 proposes to arrange parameters of a change of the air-fuel ratio by an air-fuel ratio changing means used for abnormality detection, such as a cycle and an amplitude, to be variable based on a detected fuel property, in order to precisely perform the detection of abnormality in an internal combustion engine regardless of the fuel property.

### [Citation List]

### [Patent Literatures]

[Patent Literature 1] Japanese Laid-Open Patent Publication No. 2009-041515
[Patent Literature 2] Japanese Laid-Open Patent Publication No. 2010-077805

### [Summary]

### [Technical Problem]

As described above, the following devices have been proposed: the catalyst deterioration diagnostic device of Patent Literature 1 which improves the accuracy of estimation of the fuel property in order to improve the accuracy of the diagnosis of deterioration of a catalyst in an engine using fuel in which alcohol is mixed with gasoline; and the catalyst deterioration diagnostic device of Patent Literature 2 which arranges a cycle and an amplitude which are parameters of a change of the air-fuel ratio used for detecting abnormality in an internal combustion engine to be variable based on a fuel property. A desired catalyst deterioration diagnostic device is required to be different from the known catalyst deterioration diagnostic device and to be capable of not only improving the accuracy of the diagnosis of deterioration of a catalyst in an engine using fuel in which alcohol is mixed with gasoline but also further improving the accuracy of the diagnosis of deterioration of the catalyst in the engine using fuel in which alcohol is mixed with gasoline by being combined with the known catalyst deterioration diagnostic device.

An object of the present teaching is to provide a catalyst deterioration diagnostic device which is different from the known catalyst deterioration diagnostic device and is capable of not only improving the accuracy of the diagnosis of deterioration of a catalyst in an engine using fuel in which alcohol is mixed with gasoline but also further improving the accuracy of the diagnosis of deterioration of the catalyst in the engine using fuel in which alcohol is mixed with gasoline by being combined with the known catalyst deterioration diagnostic device.

### [Solution to Problem]

Patent Literature 1 focuses on the accuracy of estimation of the fuel property and the correction of data (measurement value of the oxygen storage capacity) that is the target of determination in the catalyst deterioration diagnosis. It is considered that Patent Literature 1 is based on a technical idea of adjusting a difference in phenomenon due to a difference in fuel property by the correction. Patent Literature 2 focuses on the standard of determination in the diagnosis of deterioration of a catalyst and is based on a technical idea of changing the standard of determination in accordance with a difference in phenomenon due to a difference in fuel property, in order to accurately perform catalyst deterioration diagnosis irrespective of a fuel property.

The inventors of the subject application tried to conceive of a catalyst deterioration diagnosis method based on a technical idea, which is different from the above-described technical idea, of achieving successful determination with the acceptance of a difference in phenomenon due to a difference in a fuel property.

Furthermore, the inventors of the subject application focused on a variation in phenomenon regardless of the fuel property, both when the catalyst is deteriorated and when the catalyst is normal. The inventors of the subject application tried to conceive of a catalyst deterioration diagnosis method based on a technical idea of achieving determination with the acceptance of not only a difference in phenomenon due to a difference in fuel property but also a variation in phenomenon when the catalyst is deteriorated and a variation in phenomenon when the catalyst is normal. As a result, the inventors conceived of the following catalyst deterioration diagnostic device.

(1) A catalyst deterioration diagnostic device for a flexible fuel engine of an embodiment of the present teaching has the following features.

The catalyst deterioration diagnostic device is used for a flexible fuel engine which is configured to combust flexible fuel and includes: a flexible fuel supplier which is configured to supply the flexible fuel having different mixture ratios, in which gasoline and alcohol are mixed at different ratios; a catalyst which is configured to purify exhaust gas generated by combustion of the supplied flexible fuel; a front sensor which is configured to detect a state of the exhaust gas before passing through the catalyst; and a rear sensor which is configured to detect a state of the exhaust gas after passing through the catalyst, and the catalyst deterioration diagnostic device includes a processor which is configured to perform a diagnosis process of diagnosing a state of deterioration of the catalyst based on at least a signal of the rear sensor.

The front sensor is an upstream oxygen sensor which is configured to output a signal which is reversed between a rich state and a lean state in which the oxygen concentration is higher than the oxygen concentration in the rich state, in accordance with increase and decrease of the oxygen concentration in the exhaust gas before passing through the catalyst, and the rear sensor is a downstream oxygen sensor which is configured to output a signal which is reversed between a first state and a second state in which the oxygen concentration is higher than the oxygen concentration in the first state, when the oxygen concentration in the exhaust gas after passing through the catalyst increases and decreases in such a way that a state in which the oxygen concentration is lower than a predetermined range and a state in which the oxygen concentration is higher than the predetermined range are repeatedly alternated.

The catalyst deterioration diagnostic device is configured to control the flexible fuel supplier by setting a cycle and amplitude of increase and decrease of a flexible fuel amount in a diagnosis period, either (I) without being based on the signal of the downstream oxygen sensor but based on at least the signal of the upstream oxygen sensor and the mixture ratio of the flexible fuel or (II) based on at least the signal of the upstream oxygen sensor and the signal of the downstream oxygen sensor such that, in a period that is a combination of multiple diagnosis periods, (a) the signal of the downstream oxygen sensor when the catalyst is deteriorated is reversed multiple times irrespective of (1) a difference in a mixture ratio of the flexible fuel and (2) a difference in magnitude of at least one of a cycle or an amplitude of the signal of the downstream oxygen sensor due to the difference in the mixture ratio of the flexible fuel, and (b) the signal of the downstream oxygen sensor when the catalyst is normal (i) is maintained in the first state without being reversed to the second state or (ii) is reversed at least once with at least one of a cycle that is large or an amplitude that is small compared to the signal of the downstream oxygen sensor when the catalyst is deteriorated, irrespective of the mixture ratio of the flexible fuel. The diagnosis period has a length equal to or longer than one cycle of the signal of the upstream oxygen sensor during execution of the diagnosis process and has a length such that one driving cycle includes multiple diagnosis periods. The catalyst deterioration diagnostic device is configured to generate a single set of diagnostic data based on the signal of the downstream oxygen sensor in the diagnosis period, (B1) even when at least one of the cycle or amplitude of the signal of the downstream oxygen sensor in the diagnosis period is different due to a difference in the mixture ratio of the flexible fuel, (B2) even when the number of reversals of the signal of the downstream oxygen sensor in the diagnosis period is smaller than the number of reversals of the signal of the upstream oxygen sensor in the diagnosis period, when the catalyst is deteriorated, and (B3) even when the signal of the downstream oxygen sensor is reversed in the diagnosis period when the catalyst is normal. The catalyst deterioration diagnostic device is configured to generate the state of deterioration of the catalyst based on at least one set of the diagnostic data generated based on the signal of the downstream oxygen sensor in a total diagnosis period which includes at least one diagnosis period, which has a length equal to or longer than any two cycles of the signal of the upstream oxygen sensor, and to which features of the respective signals of the downstream oxygen sensor when the catalyst is normal and when the catalyst is deteriorated are reflected, (C1) even when at least one of the cycle or amplitude of the signal of the downstream oxygen sensor in the diagnosis period is different due to a difference in the mixture ratio of the flexible fuel, (C2) even when the number of reversals of the signal of the downstream oxygen sensor in the diagnosis period is smaller than the number of reversals of the signal of the upstream oxygen sensor in the diagnosis period, when the catalyst is deteriorated, and (C3) even when the signal of the downstream oxygen sensor is reversed in the diagnosis period when the catalyst is normal.

According to this arrangement, the catalyst deterioration diagnostic device for the flexible fuel engine controls the flexible fuel supplier by setting the cycle and amplitude of increase and decrease of the flexible fuel amount in the diagnosis period either (I) without being based on the signal of the downstream oxygen sensor but based on at least the signal of the upstream oxygen sensor and the mixture ratio of the flexible fuel or (II) based on at least the signal of the upstream oxygen sensor and the signal of the downstream oxygen sensor. The diagnosis period has a length equal to or longer than one cycle of the signal of the upstream oxygen sensor, and has a length such that one driving cycle includes multiple diagnosis periods. In a period that is a combination of multiple diagnosis periods, in order to cause the signal of the downstream oxygen sensor when the catalyst is deteriorated to be reversed multiple times irrespective of (a1) a difference in a mixture ratio of the flexible fuel and (a2) a difference in magnitude of at least one of a cycle or an amplitude of the signal of the downstream oxygen sensor due to the difference in the mixture ratio of the flexible fuel, the cycle and amplitude of increase and decrease of the flexible fuel amount in the diagnosis period is set. Furthermore, the cycle and amplitude of increase and decrease of the flexible fuel amount during the diagnosis period are set so that, in the period that is a combination of multiple diagnosis periods, the signal of the downstream oxygen sensor when the catalyst is normal is either (i) maintained in the first state without being reversed to the second state or (ii) reversed at least once with at least one of a cycle that is large or an amplitude that is small compared to the signal of the downstream oxygen sensor when the catalyst is deteriorated, irrespective of the mixture ratio of the flexible fuel. Furthermore, the catalyst deterioration diagnostic device generates a single set of diagnostic data based on the signal of the downstream oxygen sensor in the diagnosis period, (i) even when at least one of the cycle or amplitude of the signal of the downstream oxygen sensor in the diagnosis period is different due to a difference in the mixture ratio of the flexible fuel, (ii) even when the number of reversals of the signal of the downstream oxygen sensor in the diagnosis period is smaller than the number of reversals of the signal of the upstream oxygen sensor in the diagnosis period, when the catalyst is deteriorated, and (iii) even when the signal of the downstream oxygen sensor is reversed in the diagnosis period when the catalyst is normal. The catalyst deterioration diagnostic device is configured to diagnose the state of deterioration of the catalyst based on at least one set of diagnostic data generated based on the signal of the downstream oxygen sensor in a total diagnosis period including at least one diagnosis period. The total diagnosis period has a length equal to or longer than any two cycles of the signal of the upstream oxygen sensor. On this account, the features of the respective signals of the downstream oxygen sensor when the catalyst is normal and when the catalyst is deteriorated are reflected in the signal of the downstream oxygen sensor in the total diagnosis period, even when at least one of the cycle or amplitude of the signal of the downstream oxygen sensor in the diagnosis period is different due to a difference in the mixture ratio of the flexible fuel. Furthermore, the features of the signal of the downstream oxygen sensor when the catalyst is deteriorated are reflected in the signal of the downstream oxygen sensor in the total diagnosis period, even when the number of reversals of the signal of the downstream oxygen sensor in the diagnosis period is smaller than the number of reversals of the signal of the upstream oxygen sensor in the diagnosis period, when the catalyst is deteriorated. Furthermore, the features of the signal of the downstream oxygen sensor when the catalyst is normal are reflected in the signal of the downstream oxygen sensor in the total diagnosis period, even when the number of reversals of the signal of the downstream oxygen sensor in the diagnosis period is smaller than the number of reversals of the signal of the upstream oxygen sensor in the diagnosis period, when the catalyst is deteriorated. The catalyst deterioration diagnostic device is configured to diagnose the state of deterioration of the catalyst based on one set of diagnostic data generated based on the signal of the downstream oxygen sensor in the total diagnosis period, in which the features of the respective signals of the downstream oxygen sensor when the catalyst is normal and when the catalyst is deteriorated are reflected. It is therefore possible to highly accurately diagnose the state of deterioration of the catalyst. Furthermore, it is possible to improve the accuracy of the diagnosis of deterioration of the catalyst while allowing a difference in at least one of the cycle or amplitude of the signal of the downstream oxygen sensor due to a difference in the mixture ratio of the flexible fuel. It is therefore possible to improve the accuracy of the diagnosis of deterioration of the catalyst without improving the accuracy of estimation of the mixture ratio, when the catalyst deterioration diagnostic device estimates the mixture ratio of the flexible fuel and controls the flexible fuel supplier based on at least the estimated mixture ratio of the flexible fuel. Furthermore, it is possible to improve the accuracy of the diagnosis of deterioration of the catalyst without changing the control of the flexible fuel supplier in accordance with a difference in the mixture ratio of the flexible fuel. Furthermore, the catalyst deterioration diagnostic device is configured to diagnose the state of deterioration of the catalyst based on one set of diagnostic data generated based on the signal of the downstream oxygen sensor in the total diagnosis period, in which the features of the respective signals of the downstream oxygen sensor when the catalyst is normal and when the catalyst is deteriorated are reflected, (i) even when the number of reversals of the signal of the downstream oxygen sensor in the diagnosis period is smaller than the number of reversals of the signal of the upstream oxygen sensor in the diagnosis period, when the catalyst is deteriorated, and (ii) even when the signal of the downstream oxygen sensor is reversed in the diagnosis period when the catalyst is normal. It is therefore possible to improve the accuracy of the diagnosis of deterioration of the catalyst while allowing a variation in the state of reversal of the signal of the downstream oxygen sensor when the catalyst is deteriorated and a variation in the state of the signal of the downstream oxygen sensor when the catalyst is normal.

When the ratio of the alcohol is high in the flexible fuel, the exhaust gas includes a large amount of hydrogen. The hydrogen in the exhaust gas tends to be combusted by oxygen in the exhaust gas at around a sensor element of the upstream oxygen sensor. On this account, when the ratio of alcohol is high in the flexible fuel, the oxygen concentration indicated by the signal of the upstream oxygen sensor tends to be lower than the actual oxygen concentration of the exhaust gas. Because the supplied flexible fuel amount is controlled at least based on the signal of the upstream oxygen sensor, the oxygen concentration of the exhaust gas after passing through the catalyst tends to be high when the ratio of alcohol is high in the flexible fuel. On this account, in the flexible fuel engine, the signal of the downstream oxygen sensor tends to be maintained in the second state even when the catalyst is deteriorated. This is not limited to the flexible fuel engine. When the catalyst is normal, the signal of the downstream oxygen sensor may be in the first state or the second state in accordance with the oxygen absorption amount of the catalyst. However, according to the arrangement above, the flexible fuel supplier is controlled so that, in the period that is a combination of multiple diagnosis periods, the signal of the downstream oxygen sensor when the catalyst is normal is either (i) maintained in the first state without being reversed to the second state or (ii) permitted to be reversed at least once with at least one of a cycle that is large or an amplitude that is small compared to the signal of the downstream oxygen sensor when the catalyst is deteriorated, irrespective of the mixture ratio of the flexible fuel. Because the signal of the downstream oxygen sensor tends to be repeatedly reversed and is unlikely to be maintained in the second state when the catalyst is deteriorated, the accuracy of the diagnosis of deterioration can be improved. Furthermore, because the state of deterioration of the catalyst can be diagnosed with reference to the signal of the downstream oxygen sensor in the rich state when the catalyst is normal, the accuracy of the diagnosis of deterioration can be improved. Consequently, the catalyst deterioration diagnostic device is different from the known catalyst deterioration diagnostic device but is capable of not only improving the accuracy of the diagnosis of deterioration of a catalyst in an engine using fuel in which alcohol is mixed with gasoline but also further improving the accuracy of the diagnosis of deterioration of the catalyst in the engine using fuel in which alcohol is mixed with gasoline by being combined with the known catalyst deterioration diagnostic device.

(2) The catalyst deterioration diagnostic device for the flexible fuel engine of the embodiment of the present teaching may have the following feature in addition to the features of the arrangement (1). In the diagnosis period, the catalyst deterioration diagnostic device is configured to control the flexible fuel supplier by setting the cycle and amplitude of increase and decrease of the flexible fuel amount in the diagnosis period to be larger than at least one of the cycle or amplitude of increase and decrease of the flexible fuel amount in a period which is without execution of the diagnosis process and in which the mixture ratio of the flexible fuel is equal to the mixture ratio of the flexible fuel in this diagnosis period, either (I) without being based on the signal of the downstream oxygen sensor but based on at least the signal of the upstream oxygen sensor and the mixture ratio of the flexible fuel or (II) based on at least the signal of the upstream oxygen sensor and the signal of the downstream oxygen sensor.

According to this arrangement, it is possible in the diagnosis period to set the cycle and amplitude of increase and decrease of the flexible fuel amount so that the signal of the downstream oxygen sensor when the catalyst is deteriorated is reliably reversed in a repeated manner, irrespective of a difference in the mixture ratio of the flexible fuel. On this account, it is possible to further improve the accuracy of the diagnosis of deterioration of the catalyst even when there is a difference in at least one of the cycle or amplitude of the signal of the downstream oxygen sensor due to a difference in the mixture ratio of the flexible fuel.

(3) The catalyst deterioration diagnostic device for the flexible fuel engine of the embodiment of the present teaching may have the following feature in addition to the features of at least one of the arrangements (1) or (2).

When the signal of the downstream oxygen sensor is in the second state at a time point at which the signal of the upstream oxygen sensor is reversed from the lean state to the rich state while the supplied flexible fuel amount is increasing in the diagnosis period, the catalyst deterioration diagnostic device controls the flexible fuel supplier by setting the cycle and amplitude of increase and decrease of the flexible fuel amount in the diagnosis period, based on at least the signal of the upstream oxygen sensor and the signal of the downstream oxygen sensor so that decrease of the supplied flexible fuel amount is avoided until the signal of the downstream oxygen sensor is reversed from the second state to the first state.

As described above, in the flexible fuel engine, because the oxygen concentration indicated by the signal of the upstream oxygen sensor tends to be lower than the actual oxygen concentration of the exhaust gas, the signal of the downstream oxygen sensor tends to be maintained in the second state even when the catalyst is deteriorated. With the arrangement above, in the diagnosis period, when the signal of the downstream oxygen sensor is in the second state at the time point at which the signal of the upstream oxygen sensor is reversed to the rich state while the supplied flexible fuel amount is increasing, the catalyst deterioration diagnostic device for the flexible fuel engine does not decrease the supplied flexible fuel amount until the signal of the downstream oxygen sensor is reversed from the second state to the first state. On this account, in the diagnosis period, the signal of the downstream oxygen sensor tends to be repeatedly reversed when the catalyst is deteriorated, irrespective of a difference in the mixture ratio of the flexible fuel. Furthermore, in the diagnosis period in which the catalyst is normal, even when the signal of the downstream oxygen sensor is in the second state at the reversal of the signal of the upstream oxygen sensor to the rich state while the supplied flexible fuel amount is increasing, the signal of the downstream oxygen sensor tends to be maintained in the first state and is unlikely to be reversed, after the signal of the downstream oxygen sensor is reversed to the first state. On this account, in the diagnosis period, the signal of the downstream oxygen sensor when the catalyst is normal tends to be maintained in the first state and is unlikely to be reversed, irrespective of a difference in the mixture ratio of the flexible fuel. It is therefore possible to further improve the accuracy of the diagnosis of deterioration of the catalyst even when there is a difference in at least one of the cycle or amplitude of the signal of the downstream oxygen sensor due to a difference in the mixture ratio of the flexible fuel.

(4) The catalyst deterioration diagnostic device for the flexible fuel engine of the embodiment of the present teaching may have the following feature in addition to the features of the arrangement (3). When the signal of the downstream oxygen sensor is in the second state at a time point at which the signal of the upstream oxygen sensor is reversed from the lean state to the rich state while the supplied flexible fuel amount is increasing in a diagnosis preparation period prior to the diagnosis period, the catalyst deterioration diagnostic device controls the flexible fuel supplier by setting an increasing time and an increasing amount of the flexible fuel amount from the time point at which the signal of the upstream oxygen sensor is reversed from the lean state to the rich state in the diagnosis preparation period, based on at least the signal of the upstream oxygen sensor and the signal of the downstream oxygen sensor so that decrease of the supplied flexible fuel amount is avoided until the signal of the downstream oxygen sensor is reversed from the second state to the first state.

With the arrangement above, in the diagnosis preparation period, when the signal of the downstream oxygen sensor is in the second state at the time point at which the signal of the upstream oxygen sensor is reversed to the rich state while the supplied flexible fuel amount is increasing, the catalyst deterioration diagnostic device for the flexible fuel engine does not decrease the supplied flexible fuel amount until the signal of the downstream oxygen sensor is reversed from the second state to the first state. On this account, in the diagnosis period after the diagnosis preparation period, the signal of the downstream oxygen sensor tends to be repeatedly reversed when the catalyst is deteriorated, irrespective of a difference in the mixture ratio of the flexible fuel. Furthermore, in the diagnosis preparation period in which the catalyst is normal, even when the signal of the downstream oxygen sensor is in the second state at a time point at which the signal of the upstream oxygen sensor is reversed to the rich state while the supplied flexible fuel amount is increasing, the signal of the downstream oxygen sensor tends to be maintained in the first state and is unlikely to be reversed, after the signal of the downstream oxygen sensor is reversed to the first state. On this account, in the diagnosis period, the signal of the downstream oxygen sensor when the catalyst is normal tends to be maintained in the first state and is unlikely to be reversed, irrespective of a difference in the mixture ratio of the flexible fuel. It is therefore possible to further improve the accuracy of the diagnosis of deterioration of the catalyst even when there is a difference in at least one of the cycle or amplitude of the signal of the downstream oxygen sensor due to a difference in the mixture ratio of the flexible fuel.

(5) The catalyst deterioration diagnostic device for the flexible fuel engine of the embodiment of the present teaching may have the following feature in addition to the features of the arrangement (4). The catalyst deterioration diagnostic device controls the flexible fuel supplier by setting the increasing time and the increasing amount of the flexible fuel amount from the time point at which the signal of the upstream oxygen sensor is reversed from the lean state to the rich state in the diagnosis preparation period and the cycle and amplitude of increase and decrease of the flexible fuel amount in the diagnosis period, based on at least the signal of the upstream oxygen sensor and the signal of the downstream oxygen sensor so that the maximum value of the supplied flexible fuel amount in the diagnosis preparation period is larger than the maximum value of the supplied flexible fuel amount in the diagnosis period.

With this arrangement, in the diagnosis period, the signal of the downstream oxygen sensor tends to be repeatedly reversed when the catalyst is deteriorated in a further reliable manner, irrespective of a difference in the mixture ratio of the flexible fuel. Furthermore, in the diagnosis period, the signal of the downstream oxygen sensor when the catalyst is normal tends to be maintained in the first state and is unlikely to be reversed in a further reliable manner, irrespective of a difference in the mixture ratio of the flexible fuel. It is therefore possible to even further improve the accuracy of the diagnosis of deterioration of the catalyst even when there is a difference in at least one of the cycle or amplitude of the signal of the downstream oxygen sensor due to a difference in the mixture ratio of the flexible fuel.

(6) The catalyst deterioration diagnostic device for the flexible fuel engine of the embodiment of the present teaching may have the following feature in addition to the features of at least one of the arrangements (1) to (3).

The upstream oxygen sensor is configured to output a signal having a value equal to a first limit value when the oxygen concentration in the exhaust gas before passing through the catalyst is lower than a predetermined concentration detection range, to output a signal having a value equal to a second limit value when the oxygen concentration in the exhaust gas before passing through the catalyst is higher than the concentration detection range, and to output a signal continuously changing between the first limit value and the second limit value in accordance with the oxygen concentration when the oxygen concentration in the exhaust gas before passing through the catalyst falls within the concentration detection range.

The catalyst deterioration diagnostic device is configured to (a) determine a timing to decrease the supplied flexible fuel amount at least with reference to a time point at which the signal of the upstream oxygen sensor reaches a rich determination threshold in the concentration detection range, and (b) determine a timing to increase the supplied flexible fuel amount at least with reference to a time point at which the signal of the upstream oxygen sensor reaches a lean determination threshold indicating oxygen concentration that falls within the concentration detection range and is equal to or higher than the rich determination threshold, (c) change the rich determination threshold and the lean determination threshold to be closer to the first limit value in a threshold changing period before the diagnosis period, until the downstream oxygen sensor outputs a signal in the first state, and (d) control the flexible fuel supplier by setting the cycle and amplitude of increase and decrease of the flexible fuel amount in the diagnosis period and controlling the flexible fuel supplier either (I) without being based on the signal of the downstream oxygen sensor but based on at least the signal of the upstream oxygen sensor and the mixture ratio of the flexible fuel or (II) based on at least the signal of the upstream oxygen sensor and the signal of the downstream oxygen sensor.

As described above, in the flexible fuel engine, because the oxygen concentration indicated by the signal of the upstream oxygen sensor tends to be lower than the actual oxygen concentration of the exhaust gas, the signal of the downstream oxygen sensor tends to be maintained in the second state even when the catalyst is deteriorated. With this arrangement, however, the catalyst deterioration diagnostic device for the flexible fuel engine changes the rich determination threshold and the lean determination threshold, which are used as references for determining the timing to decrease the flexible fuel amount and the timing to increase the flexible fuel amount in the threshold changing period, to become closer to the first limit value, until the downstream oxygen sensor outputs the signal in the first state. It is therefore possible to decrease the flexible fuel amount after the actual oxygen concentration of the exhaust gas before passing through the catalyst is sufficiently lowered. Furthermore, it is possible to suppress the increase in the flexible fuel amount before the actual oxygen concentration of the exhaust gas before passing through the catalyst is sufficiently increased. On this account, in the diagnosis period, the signal of the downstream oxygen sensor tends to be repeatedly reversed when the catalyst is deteriorated, irrespective of a difference in the mixture ratio of the flexible fuel. Furthermore, in the diagnosis period, the signal of the downstream oxygen sensor when the catalyst is normal tends to be maintained in the first state and is unlikely to be reversed, irrespective of a difference in the mixture ratio of the flexible fuel. It is therefore possible to further improve the accuracy of the diagnosis of deterioration of the catalyst even when there is a difference in at least one of the cycle or amplitude of the signal of the downstream oxygen sensor due to a difference in the mixture ratio of the flexible fuel.

(7) The catalyst deterioration diagnostic device for the flexible fuel engine of the embodiment of the present teaching may have the following feature in addition to the features of at least one of the arrangements (1) to (3).

The catalyst deterioration diagnostic device controls the flexible fuel supplier by setting the cycle and amplitude of increase and decrease of the flexible fuel amount in at least the diagnosis period among the diagnosis period and a diagnosis preparation period prior to the diagnosis period, without being based on the signal of the downstream oxygen sensor but based on at least the signal of the upstream oxygen sensor and the mixture ratio of the flexible fuel so that an integral value of an increasing amount of the flexible fuel amount from a time point at which the signal of the upstream oxygen sensor is reversed from the lean state to the rich state in at least one of the diagnosis preparation period or a period including the first cycle of the signal of the upstream oxygen sensor in the diagnosis period is larger than an integral value of a decreasing amount of the flexible fuel amount from a time point at which the signal of the upstream oxygen sensor is reversed from the rich state to the lean state in the diagnosis period.

As described above, in the flexible fuel engine, because the oxygen concentration indicated by the signal of the upstream oxygen sensor tends to be lower than the actual oxygen concentration of the exhaust gas, the signal of the downstream oxygen sensor tends to be maintained in the second state even when the catalyst is deteriorated. With this arrangement, however, the cycle and amplitude of increase and decrease of the flexible fuel amount in the diagnosis preparation period and the diagnosis period are set so that the integral value of the increasing amount of the flexible fuel amount from the time point at which the signal of the upstream oxygen sensor is reversed from the lean state to the rich state in the diagnosis preparation period is larger than the integral value of the decreasing amount of the flexible fuel amount from the time point at which the signal of the upstream oxygen sensor is reversed from the rich state to the lean state in the diagnosis period after the diagnosis preparation period. In place of or in addition to this arrangement, the catalyst deterioration diagnostic device for the flexible fuel engine sets the cycle and amplitude of increase and decrease of the flexible fuel amount in the diagnosis period so that the integral value of the increasing amount of the flexible fuel amount from the time point at which the signal of the upstream oxygen sensor is reversed to the rich state in at least one of period including the first cycle of the signal of the upstream oxygen sensor in the diagnosis period is larger than the integral value of the decreasing amount of the flexible fuel amount from the time point at which the signal of the upstream oxygen sensor is reversed from the rich state to the lean state in the diagnosis period. On this account, in the diagnosis period, the signal of the downstream oxygen sensor tends to be repeatedly reversed when the catalyst is deteriorated, irrespective of a difference in the mixture ratio of the flexible fuel. Furthermore, in the diagnosis period, the signal of the downstream oxygen sensor when the catalyst is normal tends to be maintained in the first state and is unlikely to be reversed, irrespective of a difference in the mixture ratio of the flexible fuel. It is therefore possible to further improve the accuracy of the diagnosis of deterioration of the catalyst even when there is a difference in at least one of the cycle or amplitude of the signal of the downstream oxygen sensor due to a difference in the mixture ratio of the flexible fuel.

(8) The catalyst deterioration diagnostic device for the flexible fuel engine of the embodiment of the present teaching may have the following feature in addition to the features of at least one of the arrangements (1) or (2).

When the signal of the downstream oxygen sensor is in the second state at a time point at which the signal of the upstream oxygen sensor is reversed from the lean state to the rich state while the supplied flexible fuel amount is increasing in a diagnosis preparation period prior to the diagnosis period, the catalyst deterioration diagnostic device (a) controls the flexible fuel supplier by setting an increasing time and an increasing amount of the flexible fuel amount from the time point at which the signal of the upstream oxygen sensor is reversed from the lean state to the rich state in the diagnosis preparation period, based on at least the signal of the upstream oxygen sensor and the signal of the downstream oxygen sensor so that decrease of the supplied flexible fuel amount is avoided until the signal of the downstream oxygen sensor is reversed from the second state to the first state, and (b) controls by setting the cycle and amplitude of increase and decrease of the flexible fuel amount in the diagnosis period after the diagnosis preparation period and controlling the flexible fuel supplier without being based on the signal of the downstream oxygen sensor but based on at least the signal of the upstream oxygen sensor and the mixture ratio of the flexible fuel.

As described above, in the flexible fuel engine, because the oxygen concentration indicated by the signal of the upstream oxygen sensor tends to be lower than the actual oxygen concentration of the exhaust gas, the signal of the downstream oxygen sensor tends to be maintained in the second state even when the catalyst is deteriorated. With the arrangement above, in the diagnosis preparation period, when the signal of the downstream oxygen sensor is in the second state at the time point at which the signal of the upstream oxygen sensor is reversed to the rich state while the supplied flexible fuel amount is increasing, the supplied flexible fuel amount is not decreased until the signal of the downstream oxygen sensor is reversed from the second state to the first state. On this account, in the diagnosis period after the diagnosis preparation period, the signal of the downstream oxygen sensor tends to be repeatedly reversed when the catalyst is deteriorated, irrespective of a difference in the mixture ratio of the flexible fuel. Furthermore, in the diagnosis preparation period in which the catalyst is normal, even when the signal of the downstream oxygen sensor is in the second state at the reversal of the signal of the upstream oxygen sensor to the rich state while the supplied flexible fuel amount is increasing, the signal of the downstream oxygen sensor tends to be maintained in the first state and is unlikely to be reversed, after the signal of the downstream oxygen sensor is reversed to the first state. On this account, in the diagnosis period, the signal of the downstream oxygen sensor when the catalyst is normal tends to be maintained in the first state and is unlikely to be reversed, irrespective of a difference in the mixture ratio of the flexible fuel. It is therefore possible to further improve the accuracy of the diagnosis of deterioration of the catalyst even when there is a difference in at least one of the cycle or amplitude of the signal of the downstream oxygen sensor due to a difference in the mixture ratio of the flexible fuel.

(9) The catalyst deterioration diagnostic device for the flexible fuel engine of the embodiment of the present teaching may have the following feature in addition to the features of at least one of the arrangements (1) to (3).

The catalyst deterioration diagnostic device (a) controls the flexible fuel supplier by setting an increasing time and an increasing amount of the flexible fuel amount from a time point at which the signal of the upstream oxygen sensor is reversed from the lean state to the rich state in a diagnosis preparation period prior to the diagnosis period, without being based on the signal of the downstream oxygen sensor but based on at least the signal of the upstream oxygen sensor and the signal of the mixture ratio of the flexible fuel so that an integral value of an increasing amount of the flexible fuel amount from the time point at which the signal of the upstream oxygen sensor is reversed from the lean state to the rich state in the diagnosis preparation period is larger than an integral value of a decreasing amount of the flexible fuel amount from a time point at which the signal of the upstream oxygen sensor is reversed from the rich state to the lean state in the diagnosis period after the diagnosis preparation period, and (b) controls by setting the cycle and amplitude of increase and decrease of the flexible fuel amount in the diagnosis period after the diagnosis preparation period based on at least the signal of the upstream oxygen sensor and the signal of the downstream oxygen sensor.

As described above, in the flexible fuel engine, because the oxygen concentration indicated by the signal of the upstream oxygen sensor tends to be lower than the actual oxygen concentration of the exhaust gas, the signal of the downstream oxygen sensor tends to be maintained in the second state even when the catalyst is deteriorated. With this arrangement, catalyst deterioration diagnostic device for the flexible fuel engine controls the flexible fuel supplier so that the integral value of the increasing amount of the flexible fuel amount from the time point at which the signal of the upstream oxygen sensor is reversed from the lean state to the rich state in the diagnosis preparation period is larger than the integral value of the decreasing amount of the flexible fuel amount from the time point at which the signal of the upstream oxygen sensor is reversed from the rich state to the lean state in the diagnosis period after the diagnosis preparation period. On this account, in the diagnosis period after the diagnosis preparation period, the signal of the downstream oxygen sensor tends to be repeatedly reversed when the catalyst is deteriorated, irrespective of a difference in the mixture ratio of the flexible fuel. Furthermore, in the diagnosis period after the diagnosis preparation period, the signal of the downstream oxygen sensor when the catalyst is normal tends to be maintained in the first state and is unlikely to be reversed, irrespective of a difference in the mixture ratio of the flexible fuel. It is therefore possible to further improve the accuracy of the diagnosis of deterioration of the catalyst even when there is a difference in at least one of the cycle or amplitude of the signal of the downstream oxygen sensor due to a difference in the mixture ratio of the flexible fuel.

(10) The catalyst deterioration diagnostic device for the flexible fuel engine of the embodiment of the present teaching may have the following feature in addition to the features of at least one of the arrangements (1) to (9).

The catalyst deterioration diagnostic device is configured to generate the single set of diagnostic data based on sets of data per unit period of the signal of the downstream oxygen sensor, which are obtained in the diagnosis period, (i) even when at least one of the cycle or amplitude of the signal of the downstream oxygen sensor in the diagnosis period is different due to a difference in the mixture ratio of the flexible fuel, (ii) even when the number of reversals of the signal of the downstream oxygen sensor in the diagnosis period is smaller than the number of reversals of the signal of the upstream oxygen sensor in the diagnosis period, when the catalyst is deteriorated, and (iii) even when the signal of the downstream oxygen sensor is reversed in the diagnosis period when the catalyst is normal.

With this arrangement, the diagnostic data is generated based on multiple sets of data per unit period, which are obtained in the diagnosis period of the signal of the downstream oxygen sensor. On this account, the features of the respective signals of the downstream oxygen sensor when the catalyst is normal and when the catalyst is deteriorated are easily reflected in the diagnostic data, (i) even when at least one of the cycle or amplitude of the signal of the downstream oxygen sensor in the diagnosis period is different due to a difference in the mixture ratio of the flexible fuel, (ii) even when the number of reversals of the signal of the downstream oxygen sensor in the diagnosis period is smaller than the number of reversals of the signal of the upstream oxygen sensor in the diagnosis period, when the catalyst is deteriorated, and (iii) even when the signal of the downstream oxygen sensor is reversed in the diagnosis period when the catalyst is normal. On this account, it is possible to further improve the accuracy of the diagnosis of deterioration of the catalyst even when there is a difference in at least one of the cycle or amplitude of the signal of the downstream oxygen sensor due to a difference in the mixture ratio of the flexible fuel.

(11) The catalyst deterioration diagnostic device for the flexible fuel engine of the embodiment of the present teaching may have the following feature in addition to the features of the arrangement (10). The catalyst deterioration diagnostic device generates the single set of diagnostic data in which multiple types of feature quantities regarding a change of the downstream oxygen sensor in the diagnosis period are reflected, based on the sets of data per unit period of the signal of the downstream oxygen sensor, which are obtained in the diagnosis period, (i) even when at least one of the cycle or amplitude of the signal of the downstream oxygen sensor in the diagnosis period is different due to a difference in the mixture ratio of the flexible fuel, (ii) even when the number of reversals of the signal of the downstream oxygen sensor in the diagnosis period is smaller than the number of reversals of the signal of the upstream oxygen sensor in the diagnosis period, when the catalyst is deteriorated, and (iii) even when the signal of the downstream oxygen sensor is reversed in the diagnosis period when the catalyst is normal.

With this arrangement, the diagnostic data is data in which multiple types of feature quantities regarding a change of the signal of the downstream oxygen sensor in the diagnosis period, which are generated based on sets of data per unit period obtained in the diagnosis period of the signal of the downstream oxygen sensor, are reflected. On this account, it is possible to further improve the accuracy of the diagnosis of deterioration of the catalyst even when there is a difference in at least one of the cycle or amplitude of the signal of the downstream oxygen sensor due to a difference in the mixture ratio of the flexible fuel.

(12) The catalyst deterioration diagnostic device for the flexible fuel engine of the embodiment of the present teaching may have the following feature in addition to the features of the arrangement (11). The catalyst deterioration diagnostic device generates the single set of diagnostic data regarding a Mahalanobis' distance based on a Mahalanobis-Taguchi Method, in which multiple types of feature quantities regarding a change of the downstream oxygen sensor in the diagnosis period are reflected, based on the sets of data per unit period of the signal of the downstream oxygen sensor, which are obtained in the diagnosis period, (i) even when at least one of the cycle or amplitude of the signal of the downstream oxygen sensor in the diagnosis period is different due to a difference in the mixture ratio of the flexible fuel, (ii) even when the number of reversals of the signal of the downstream oxygen sensor in the diagnosis period is smaller than the number of reversals of the signal of the upstream oxygen sensor in the diagnosis period, when the catalyst is deteriorated, and (iii) even when the signal of the downstream oxygen sensor is reversed in the diagnosis period when the catalyst is normal.

With this arrangement, the diagnostic data is the Mahalanobis' distance based on the Mahalanobis-Taguchi Method, in which multiple types of feature quantities regarding a change of the signal of the downstream oxygen sensor in the diagnosis period, which are generated based on sets of data per unit period obtained in the diagnosis period of the signal of the downstream oxygen sensor, are reflected. On this account, it is possible to further improve the accuracy of the diagnosis of deterioration of the catalyst even when there is a difference in at least one of the cycle or amplitude of the signal of the downstream oxygen sensor due to a difference in the mixture ratio of the flexible fuel.

In the present teaching and the embodiments, a catalyst deterioration diagnostic device for a flexible fuel engine for the flexible fuel engine is a device which includes a processor and a storage device and is configured to perform at least a diagnosis process of diagnosing a catalyst and control of a flexible fuel supplier described in the present teaching and the embodiments. The catalyst deterioration diagnostic device is, for example, an ECU (Electronic Control Unit). The processor is configured to be able to perform controls described in the present teaching and the description. The processor encompasses a microcontroller, a central processing unit (CPU), a microprocessor, a multiprocessor, an application specific integrated circuit (ASIC), a programmable logic circuit (PLC), a field programmable gate array (FPGA), and any other circuits capable of performing the diagnosis process and the control of the flexible fuel supplier described in the present teaching and the description. The storage device is a device for storing data and programs. The storage device includes a non-transitory storage medium having a program instruction for performing the diagnosis process and the control of the flexible fuel supplier. The storage device encompasses semiconductor memories such as a resistor and a cash memory, a main memory (a main storage or a RAM), and a storage (an external storage device or an auxiliary storage device).

In the present teaching and embodiments, the catalyst deterioration diagnostic device may be provided in a driving target (e.g., a vehicle or a generator) on which a flexible fuel engine is mounted. The catalyst deterioration diagnostic device may be an engine control unit configured to control the flexible fuel engine. The catalyst deterioration diagnostic device may be composed of multiple devices. For example, the catalyst deterioration diagnostic device may include a first device which is provided on the driving target on which the flexible fuel engine is mounted and is configured to perform control of at least the flexible fuel supplier and a second device which is capable of communicating with the driving target on which the flexible fuel engine is mounted and is configured to perform at least the diagnosis process.

In the present teaching, the expression "for a flexible fuel engine" in "a catalyst deterioration diagnostic device used for a flexible fuel engine" does not mean that the catalyst deterioration diagnostic device is used as a part of the flexible fuel engine but rather that the catalyst deterioration diagnostic device is used for the flexible fuel engine.

In the present teaching and embodiments, the driving target on which the flexible fuel engine is mounted is not limited to a specific type. For example, the flexible fuel engine may be mounted on a vehicle. The vehicle may or may not include a wheel. The vehicle may encompass a straddled vehicle. The straddled vehicle indicates all types of vehicles on which a rider (driver) rides in a manner of straddling a saddle. The straddled vehicle includes a motorcycle, a motor tricycle, a four-wheeled buggy (ATV: All Terrain Vehicle), a snowmobile, and a personal watercraft, for example. The vehicle may be an automobile, a ship, or a flying object such as a drone.

In the present teaching and embodiments, the flexible fuel engine is not limited to a specific type. The flexible fuel engine may be a four-stroke engine or a two-stroke engine. The flexible fuel engine may be a single-cylinder engine having one combustion chamber or a multi-cylinder engine having multiple combustion chambers. The arrangement of the cylinders (combustion chambers) in the multi-cylinder engine is not particularly limited. In the multi-cylinder engine, a cycle of reversal between increase and decrease of a flexible fuel amount supplied to each combustion chamber is equal or substantially equal between the combustion chambers. A timing of flexible fuel supply may be different between the combustion chambers. When the number of the combustion chambers is four or more, a timing of flexible fuel supply may be equal between two of the combustion chambers.

In the present teaching and embodiments, the flexible fuel supplier is a device configured to supply flexible fuel to a combustion chamber of the flexible fuel engine. The number of flexible fuel suppliers in the flexible fuel engine is not limited to one. For example, the flexible fuel supplier may be configured to supply flexible fuel to an intake passage connected to a combustion chamber. The disclosure, however, is not limited to this arrangement. The flexible fuel supplier may directly supply the fuel to the combustion chamber. In the present teaching and embodiments, the mixture ratio of flexible fuel encompasses 0% alcohol concentration and 100% alcohol concentration.

In the present teaching and embodiments, a catalyst is configured to purify at least one of hydrocarbon (HC), carbon monoxide (CO), or nitrogen oxide (NOx) in exhaust gas. In the present teaching and embodiments, the catalyst may be a three-way catalyst (TWC), for example. The three-way catalyst purifies exhaust gas by oxidizing or reducing hydrocarbon to water and carbon dioxide, carbon monoxide to carbon dioxide, and nitrogen oxide to nitrogen. In the present teaching and embodiments, the catalyst may be an oxidation catalyst or a reduction catalyst. In the present teaching and embodiments, the catalyst absorbs and retains excessive oxygen included in exhaust gas when the oxygen concentration of the exhaust gas flowing into the catalyst is large, and releases the absorbed and retained oxygen when the oxygen concentration of the exhaust gas flowing into the catalyst is low.

Hereinafter, the upstream oxygen sensor and the downstream oxygen sensor may be collectively termed as an oxygen sensor. In the present teaching and embodiments, the oxygen sensor is configured to detect the oxygen concentration in exhaust gas. In the present teaching and embodiments, the oxygen sensor includes a narrow band oxygen sensor and a wide band oxygen sensor. The upstream oxygen sensor may be a narrow band oxygen sensor or a wide band oxygen sensor. The downstream oxygen sensor is a narrow band oxygen sensor. The narrow band oxygen sensor is configured to detect whether the oxygen concentration in exhaust gas is higher than a predetermined concentration or not. The narrow band oxygen sensor is configured to continuously detect changes of the oxygen concentration only in a very narrow range of the oxygen concentration. That is to say, the narrow band oxygen sensor outputs a signal having a value equal to a first limit value when the oxygen concentration is lower than a predetermined concentration detection range, outputs a signal having a value equal to a second limit value when the oxygen concentration is higher than the concentration detection range, and outputs a signal continuously changing between the first limit value and the second limit value in accordance with the oxygen concentration when the oxygen concentration falls within the concentration detection range. A signal output from the narrow band oxygen sensor is typically a voltage signal, and the first limit value indicates a higher voltage than the second limit value. When the upstream oxygen sensor is a narrow band oxygen sensor, the concentration detection range of the upstream oxygen sensor is different from the concentration detection range of the downstream oxygen sensor. The wide band oxygen sensor is configured to continuously detect changes of the oxygen concentration in exhaust gas in a wide range of the oxygen concentration. Irrespective of the type of the upstream oxygen sensor, it is possible to estimate at least whether the air-fuel ratio of an air-fuel mixture of flexible fuel and air is rich or lean based on a signal of the upstream oxygen sensor. The air-fuel ratio of the air-fuel mixture being rich means a state where fuel is excessive compared to a target air-fuel ratio. The air-fuel ratio of the air-fuel mixture being lean means a state where air is excessive compared to the target air-fuel ratio. The oxygen sensor is able to detect the state of exhaust gas when a sensor element of the oxygen sensor is heated to a high temperature and becomes in an activated state.

In the present teaching and embodiments, the upstream oxygen sensor is configured to output a signal which is reversed between a rich state and a lean state in accordance with increase and decrease of the oxygen concentration in exhaust gas before passing through a catalyst. The signal which is reversed between the rich state and the lean state in accordance with increase and decrease of the oxygen concentration in exhaust gas indicates a signal which is repeatedly reversed from the lean state to the rich state and from the rich state to the lean state in accordance with the repetition of increase and decrease of the oxygen concentration in the exhaust gas. In the present teaching and embodiments, reversal of a signal of the upstream oxygen sensor indicates both reversal from the rich state to the lean state and reversal from the lean state to the rich state. The lean state of a signal of the upstream oxygen sensor indicates a state in which the oxygen concentration in exhaust gas is high compared to the rich state of a signal of the upstream oxygen sensor. The rich state of a signal of the upstream oxygen sensor is, for example, a state in which the voltage value or current value of the signal of the upstream oxygen sensor is higher than a predetermined boundary value. In this case, the lean state of a signal of the upstream oxygen sensor is a state in which the voltage value or current value of the signal of the upstream oxygen sensor is equal to or smaller than the predetermined boundary value. When the upstream oxygen sensor is a narrow band oxygen sensor, the predetermine boundary value may be an intermediate value between the first voltage and the second voltage having been described above. When the upstream oxygen sensor is a wide band oxygen sensor and the flexible fuel engine is in a steady state during a diagnosis period, the predetermined boundary value may be an intermediate value between the upper limit value and the lower limit value of the signal of the upstream oxygen sensor during the diagnosis period.

In the present teaching and embodiments, a cycle of a signal of the upstream oxygen sensor indicates either the length of time from the reversal of the signal of the upstream oxygen sensor from the rich state to the lean state to the next reversal from the rich state to the lean state or the length of time from the reversal of the signal of the upstream oxygen sensor from the lean state to the rich state to the next reversal from the lean state to the rich state. During one cycle of the signal of the upstream oxygen sensor, the signal of the upstream oxygen sensor is reversed twice.

In the present teaching and embodiments, the downstream oxygen sensor is configured to output a signal which is reversed between the first state and the second state when the oxygen concentration in exhaust gas having passed through a catalyst increases and decreases in such a way that a state in which the oxygen concentration is lower than a predetermined range and a state in which the oxygen concentration is higher than a predetermined range are repeatedly alternated. The downstream oxygen sensor is configured to output a signal which repeats reversal from the first state to the second state and reversal from the second state to the first state, when the oxygen concentration in exhaust gas having passed through a catalyst increases and decreases in such a way that a state in which the oxygen concentration is lower than a predetermined range and a state in which the oxygen concentration is higher than a predetermined range are repeatedly alternated. In the present teaching and embodiments, reversal of a signal of the downstream oxygen sensor indicates both reversal from the first state to the second state and reversal from the second state to the first state. The second state of a signal of the downstream oxygen sensor indicates a state in which the oxygen concentration in exhaust gas is high compared to the first state of a signal of the downstream oxygen sensor. The first state of a signal of the downstream oxygen sensor is, for example, a state in which the voltage value of the signal of the downstream oxygen sensor is higher than a predetermined boundary value. In this case, the second state of the signal of the downstream oxygen sensor is a state in which the voltage value of the signal of the downstream oxygen sensor is equal to or lower than the predetermined boundary value. The predetermine boundary value may be an intermediate value between the first voltage and the second voltage having been described above.

In the present teaching and embodiments, a cycle of a signal of the downstream oxygen sensor indicates either the length of time from the reversal of the signal of the downstream oxygen sensor from the first state to the second state to the next reversal from the first state to the second state or the length of time from the reversal of the signal of the downstream oxygen sensor from the second state to the first state to the next reversal from the second state to the first state. During one cycle of the signal of the downstream oxygen sensor, the signal of the downstream oxygen sensor is reversed twice. In the present teaching and embodiments, an amplitude of a signal of the downstream oxygen sensor indicates an absolute value of a variation amount of the signal of the downstream oxygen sensor from a boundary value between the first state and the second state.

In the present teaching and embodiments, the diagnosis period has a length equal to or longer than one cycle of a signal of the upstream oxygen sensor and has a length such that one driving cycle includes multiple diagnosis periods. One driving cycle is a duration from the start to stop of the flexible fuel engine. The statement "the diagnosis period has a length equal to one cycle of a signal of the upstream oxygen sensor" indicates that the length of the diagnosis period is equal to a length of one cycle of a signal of the upstream oxygen sensor, which overlaps the diagnosis period. In other words, when the diagnosis period has a length equal to one cycle of the signal of the upstream oxygen sensor, the start point and the end point of the diagnosis period may be different from the time points at which the signal of the upstream oxygen sensor is reversed. The length of the diagnosis period may or may not be constant. The length of the diagnosis period may be set based on the flexible fuel amount or the signal of the upstream oxygen sensor, for example. The diagnosis period is not limited to a period during which the flexible fuel engine is in a steady state, but may be a period during which the flexible fuel engine is in the steady state. The catalyst deterioration diagnostic device is able to perform a diagnosis process of the present teaching at least when the flexible fuel engine is in the steady state. A statement "the flexible fuel engine is in the steady state" indicates that at least the engine rotation speed and the engine load are constant.

In the present teaching and embodiments, a period that is a combination of multiple diagnosis periods may be a combination of multiple continuous diagnosis periods or may be a combination of multiple diagnosis periods that are not continuous. The period that is a combination of multiple diagnosis periods may be a combination of diagnosis periods that are equal in the driving state of the flexible fuel engine and the mixture ratio of the flexible fuel. In the description, the statement "the driving state of the flexible fuel engine is equal" indicates that at least the engine rotation speed and the engine load are equal.

In the present teaching and embodiments, a statement "in a period that is a combination of multiple diagnosis periods, when a signal of the downstream oxygen sensor in a case of deterioration of the catalyst is reversed multiple times irrespective of a difference in the magnitude of at least one of cycle or amplitude of the signal of the downstream oxygen sensor due to a difference in the mixture ratio of the flexible fuel" indicates that, while at least one of the cycle or amplitude of the signal of the downstream oxygen sensor when the catalyst is deteriorated due to a difference in the mixture ratio of the flexible fuel is different, the signal of the downstream oxygen sensor when the catalyst is deteriorated is reversed multiple times during a period that is a combination of multiple diagnosis periods, irrespective of a difference in the mixture ratio of the flexible fuel. In the present teaching and embodiments, a difference (change) of at least one of the cycle or amplitude of the signal of the downstream oxygen sensor due to a difference in the mixture ratio of the flexible fuel may be a difference of at least one of the cycle, the maximum amplitude in the first state, or the maximum amplitude in the second state of the signal of the downstream oxygen sensor due to a difference in the mixture ratio of the flexible fuel. When the number of reversals of the signal of the downstream oxygen sensor during the diagnosis period when the catalyst is deteriorated is three or more, the cycle of the signal of the downstream oxygen sensor may vary in one diagnosis period. The number of reversals of the signal of the downstream oxygen sensor during the diagnosis period when the catalyst is deteriorated is basically equal to or smaller than the number of reversals of the signal of the upstream oxygen sensor during the diagnosis period, but may be larger than the number of reversals of the signal of the upstream oxygen sensor during the diagnosis period.

In the present teaching and embodiments, the catalyst deterioration diagnostic device for the flexible fuel engine sets the cycle and amplitude of increase and decrease of the flexible fuel amount during the diagnosis period so that, in a period that is a combination of multiple diagnosis periods, the signal of the downstream oxygen sensor when the catalyst is normal is either (i) maintained in the first state without being reversed to the second state or (ii) reversed at least once with at least one of a cycle that is large or an amplitude that is small compared to the signal of the downstream oxygen sensor when the catalyst is deteriorated. This statement does not indicate that there is a case where the catalyst deterioration diagnostic device sets the cycle and amplitude to achieve at least one reversal of the signal of the downstream oxygen sensor when the catalyst is normal, in the period that is a combination of multiple diagnosis periods. The catalyst deterioration diagnostic device sets the cycle and amplitude of increase and decrease of the flexible fuel amount in the diagnosis period to permit at least one reversal of the signal of the downstream oxygen sensor when the catalyst is normal, in the period that is a combination of multiple diagnosis periods. In other words, the catalyst deterioration diagnostic device sets the cycle and amplitude of increase and decrease of the flexible fuel amount during the diagnosis period so that, in a period that is a combination of multiple diagnosis periods, the signal of the downstream oxygen sensor when the catalyst is normal can be either (i) maintained in the first state without being reversed to the second state or (ii) reversed at least once with at least one of a cycle that is large or an amplitude that is small compared to the signal of the downstream oxygen sensor when the catalyst is deteriorated, irrespective of the mixture ratio of the flexible fuel. The statement "compared to the signal of the downstream oxygen sensor when the catalyst is deteriorated" indicates "compared to the signal of the downstream oxygen sensor when the engine driving state and the mixture ratio of the flexible fuel are the same and the catalyst is deteriorated". In the period that is a combination of multiple diagnosis periods, the number of reversals of the signal of the downstream oxygen sensor when the catalyst is normal is smaller than the number of reversals of the signal of the upstream oxygen sensor during the diagnosis period. In the period that is a combination of multiple diagnosis periods, the signal of the downstream oxygen sensor when the catalyst is normal is arranged so that the total time of the rich state is longer than the total time of the lean state. For example, when, in the diagnosis period, the signal of the downstream oxygen sensor when the catalyst is normal is reversed with a cycle larger than that of the signal of the downstream oxygen sensor when the catalyst is deteriorated, one cycle of the signal of the downstream oxygen sensor may not always be equal to or shorter than the diagnosis period.

In the present teaching and embodiments, the catalyst deterioration diagnostic device for the flexible fuel engine controls the flexible fuel supplier so that the supplied amount of the flexible fuel periodically increases and decreases at least in the diagnosis period. In the present teaching and embodiments, at least in the diagnosis period, the catalyst deterioration diagnostic device determines a timing to decrease the supplied amount of the flexible fuel at least with reference to a time point at which the signal of the upstream oxygen sensor reaches a rich determination threshold, and determines a timing to increase the supplied amount of the flexible fuel at least with reference to a time point at which the signal of the upstream oxygen sensor reaches a lean determination threshold indicating oxygen concentration that is equal to or higher than the rich determination threshold. This feature may be applied not only to a case where the upstream oxygen sensor is a narrow band oxygen sensor but also to a case where the upstream oxygen sensor is a wide band oxygen sensor. When the signal of the upstream oxygen sensor is a narrow band oxygen sensor, the rich determination threshold and the lean determination threshold fall within the above-described concentration detection range. When the rich determination threshold and the lean determination threshold are different, the rich determination threshold in the diagnosis period is included in the rich state. When, in a threshold changing period before the diagnosis period, the catalyst deterioration diagnostic device changes the rich determination threshold and the lean determination threshold to be closer to the first limit value, the lean determination threshold in the diagnosis period may be included in the rich state or the lean state. The rich determination threshold and the lean determination threshold may be unchanged and constant.

In the present teaching and embodiments, the catalyst deterioration diagnostic device for the flexible fuel engine sets the flexible fuel amount at least in the diagnosis period. At least in the diagnosis period, the catalyst deterioration diagnostic device sets a basic flexible fuel amount and a feedback correction coefficient, and sets the flexible fuel amount based on the basic flexible fuel amount and the feedback correction coefficient. The feedback correction coefficient is a correction value for periodically increasing and decreasing the flexible fuel amount. The basic flexible fuel amount is multiplied by the feedback correction coefficient. The catalyst deterioration diagnostic device does not directly set the cycle and amplitude of increase and decrease of the flexible fuel amount, but indirectly sets the cycle and amplitude of increase and decrease of the flexible fuel amount by setting the feedback correction coefficient. When the flexible fuel engine is in the steady state, the basic flexible fuel amount is unchanged. The feedback correction coefficient is set based on at least a signal of the upstream oxygen sensor. The feedback correction coefficient is set based on at least a signal of the upstream oxygen sensor and information regarding an intake air amount, not only in the diagnosis period. The information regarding the intake air amount may be, for example, an engine rotation speed, an opening degree of a throttle valve, or an intake pressure. The information regarding the intake air amount may be an intake air amount detected by an air flow meter. In the diagnosis period, the feedback correction coefficient is set either (i) without being based on the signal of the downstream oxygen sensor but based on at least the signal of the upstream oxygen sensor and the mixture ratio of the flexible fuel or (ii) based on at least the signal of the upstream oxygen sensor and the signal of the downstream oxygen sensor.

A method of setting the basic flexible fuel amount is not particularly limited, and a known setting method may be used. For the setting of the basic flexible fuel amount, for example, an engine rotation speed, an opening degree of a throttle valve, an intake pressure, an intake air amount, etc. are used. Furthermore, for the setting of the basic flexible fuel amount, the mixture ratio of the flexible fuel is used. The mixture ratio of the flexible fuel used for setting the basic flexible fuel amount may be an estimated value estimated based on the signal of the upstream oxygen sensor. In place of the estimated value, a value detected by a sensor configured to measure the mixture ratio of the flexible fuel may be used. The basic flexible fuel amount in the subject application corresponds to a value calculated by correcting a basic flexible fuel amount by a correction value different from a feedback correction coefficient in the basic application (PCT/JP2023/011953) of the subject application.

In the present teaching and embodiments, a statement "the cycle and amplitude of increase and decrease of the flexible fuel amount in the diagnosis period are set without being based on the signal of the downstream oxygen sensor but based on at least the signal of the upstream oxygen sensor and the mixture ratio of the flexible fuel" indicates that the cycle and amplitude are set without being based on the signal of the downstream oxygen sensor but based on at least the signal of the upstream oxygen sensor and the estimated or detected mixture ratio of the flexible fuel. In the present teaching and embodiments, when the catalyst deterioration diagnostic device for the flexible fuel engine sets the cycle and amplitude of increase and decrease of the flexible fuel amount in the diagnosis period without being based on the signal of the downstream oxygen sensor but based on at least the signal of the upstream oxygen sensor and the mixture ratio of the flexible fuel, the catalyst deterioration diagnostic device sets the cycle and amplitude so that at least one of the cycle or amplitude of increase and decrease of the flexible fuel amount in the diagnosis period is different in accordance with a difference in the mixture ratio of the flexible fuel.

In the present teaching and embodiments, a statement "the cycle and amplitude of increase and decrease of the flexible fuel amount in the diagnosis period are set based on at least the signal of the upstream oxygen sensor and the signal of the downstream oxygen sensor" encompasses (i) a case where the cycle and amplitude are set without being based on the estimated or detected mixture ratio of the flexible fuel but based on at least the signal of the upstream oxygen sensor and the signal of the downstream oxygen sensor and (ii) a case where the cycle and amplitude are set based on at least the signal of the upstream oxygen sensor, the signal of the downstream oxygen sensor, and the estimated or detected mixture ratio of the flexible fuel. When the cycle and amplitude of increase and decrease of the flexible fuel amount in the diagnosis period are set without being based on the estimated or detected mixture ratio of the flexible fuel but based on at least the signal of the upstream oxygen sensor and the signal of the downstream oxygen sensor, at least one of the cycle or amplitude of increase and decrease of the flexible fuel amount in the diagnosis period may be consequently different in accordance with a difference in the mixture ratio of the flexible fuel.

In the present teaching and embodiments, the cycle of increase and decrease of the supplied amount of the flexible fuel is either a time from the start of decrease of the flexible fuel amount to the next start of decrease or a time from the start of increase of the flexible fuel amount to the next start of increase. In the present teaching and embodiments, the amplitude of fluctuation of the increase and decrease of the supplied amount of the flexible fuel is an absolute value of a variation amount of the flexible fuel amount from the center of increase and decrease of the flexible fuel amount.

In the present teaching and embodiments, in the diagnosis period, the flexible fuel supplier may be controlled so that at least one of the cycle or amplitude of increase and decrease of the supplied amount of the flexible fuel is larger than at least one of the cycle or amplitude of increase and decrease of the flexible fuel amount in a period which is without execution of the diagnosis process and in which the mixture ratio of the flexible fuel is equal to the mixture ratio of the flexible fuel in this diagnosis period.

In the present teaching and embodiments, in the diagnosis period, the flexible fuel supplier may be controlled so that at least one of the cycle or amplitude of increase and decrease of the supplied amount of the flexible fuel is equal to at least one of the cycle or amplitude of increase and decrease of the flexible fuel amount in a period which is without execution of the diagnosis process and in which the mixture ratio of the flexible fuel is equal to the mixture ratio of the flexible fuel in this diagnosis period.

This period which is without execution of the diagnosis process and in which the mixture ratio of the flexible fuel is equal to the mixture ratio of the flexible fuel in this diagnosis period indicates a period in which the mixture ratio of the flexible fuel is equal to the mixture ratio of the flexible fuel in this diagnosis period, the driving state of the flexible fuel engine is equal to the driving state of the flexible fuel engine in this diagnosis period, and the flexible fuel amount is set based on at least the signal of the upstream oxygen sensor. This period may be a period in which the cycle and amplitude of increase and decrease of the flexible fuel amount are set so that the flexible fuel amount periodically increases and decreases based on at least the signal of the upstream oxygen sensor.

In the present teaching and embodiments, the catalyst deterioration diagnostic device for the flexible fuel engine generates a single set of diagnostic data based on the signal of the downstream oxygen sensor in the diagnosis period, (i) even when at least one of the cycle or amplitude of the signal of the downstream oxygen sensor in the diagnosis period is different due to a difference in the mixture ratio of the flexible fuel, (ii) even when the number of reversals of the signal of the downstream oxygen sensor in the diagnosis period is smaller than the number of reversals of the signal of the upstream oxygen sensor in the diagnosis period, when the catalyst is deteriorated, and (iii) even when the signal of the downstream oxygen sensor is reversed in the diagnosis period when the catalyst is normal. This indicates that the catalyst deterioration diagnostic device generates a single set of diagnostic data based on the signal of the downstream oxygen sensor in the diagnosis period, in any of the following four cases. The first case is a case where the catalyst is deteriorated and the number of reversals of the downstream oxygen sensor signal in the diagnosis period is equal to the number of reversals of the upstream oxygen sensor signal. The second case is a case where the catalyst is deteriorated and the number of reversals of the downstream oxygen sensor signal in the diagnosis period is smaller than the number of reversals of the upstream oxygen sensor signal. The third case is a case where the catalyst is normal and the signal of the downstream oxygen sensor is maintained in the first state without being reversed to the second state in the diagnosis period. The fourth case is a case where the catalyst is normal and the signal of the downstream oxygen sensor is reversed at least once in the diagnosis period.

In the present teaching and embodiments, the single set of diagnostic data may be data indicating a single value. In the present teaching and embodiments, the single set of diagnostic data may be a single signal.

In the present teaching and embodiments, the catalyst deterioration diagnostic device for the flexible fuel engine is configured to diagnose the state of deterioration of the catalyst based on at least one set of diagnostic data generated based on the signal of the downstream oxygen sensor in a total diagnosis period. The total diagnosis period includes at least one diagnosis period and has a length equal to or longer than any two cycles of the signal of the upstream oxygen sensor. The total diagnosis period may be a single diagnosis period or a period that is a combination of two or more diagnosis periods. When the total diagnosis period is a single diagnosis period, the length of the diagnosis period is equal to or longer than two cycles of the signal of the upstream oxygen sensor. When the total diagnosis period is a combination of two or more diagnosis periods, the two or more diagnosis periods may or may not be continuous. The two or more diagnosis periods may be equal to each other or different from each other in length. The length of each of the two or more diagnosis periods may be equal to or longer than one cycle of the signal of the upstream oxygen sensor. When the total diagnosis period is a combination of two or more diagnosis periods, the total diagnosis period may be equal to, longer than, or shorter than "a period that is a combination of multiple diagnosis periods" of the present teaching. When the total diagnosis period is a combination of two or more diagnosis periods, the two or more diagnosis periods may be equal or different in the engine driving state. When the total diagnosis period is a combination of two or more diagnosis periods, the two or more diagnosis periods may be equal or different in the mixture ratio of the flexible fuel.

In the present teaching and embodiments, the diagnostic data may be generated based on multiple sets of data per unit period, which are obtained in the diagnosis period of the signal of the downstream oxygen sensor. The statement "(data is) generated in the diagnosis period of the signal of the downstream oxygen sensor based on multiple sets of data per unit period" indicates that (data is) generated based on data in multiple unit periods in the diagnosis period of the signal of the downstream oxygen sensor. The data in a unit period indicates data of a value of the signal of the downstream oxygen sensor. The unit period is a period that is shorter than the cycle of the signal of the downstream oxygen sensor, irrespective of a difference in the mixture ratio of the flexible fuel. The length of the unit period is short enough not to be influenced by both increase and decrease of the value of the signal of the downstream oxygen sensor, when the signal of the downstream oxygen sensor is reversed multiple times in the diagnosis period. Provided that the unit period is long and variations including both increases and decreases of the signal of the downstream oxygen sensor are included in one unit period, the amount of change of the output signal of the downstream oxygen sensor per unit period may be zero. Data in each of such a long unit period is influenced by variations including both increase and decrease.

In the present teaching and embodiments, the diagnostic data may be data in which multiple types of feature quantities regarding a change of the signal of the downstream oxygen sensor in the diagnosis period, which are generated based on sets of data per unit period obtained in the diagnosis period of the signal of the downstream oxygen sensor, are reflected. The diagnostic data in which multiple types of feature quantities regarding a change of the signal of the downstream oxygen sensor in the diagnosis period are reflected is diagnostic data which is generated based on multiple types of feature quantities regarding a change of the signal of the downstream oxygen sensor in the diagnosis period. The multiple types of feature quantities regarding a change of the output signal of the downstream oxygen sensor in the diagnosis period may include at least one of an average, a median, a mode, the maximum value, the minimum value, an accumulative value, a dispersion, or a standard deviation of an amount of change of the signal of the downstream oxygen sensor, which is obtained in each unit period of the diagnosis period. The multiple types of feature quantities regarding a change of the signal of the downstream oxygen sensor in the diagnosis period may include a frequency indicating how often an amount of change of the signal of the downstream oxygen sensor, which is obtained in each unit period of the diagnosis period, is at a specific value (e.g., mode). The amount of change obtained in each unit period of the diagnosis period may be a differential value in each unit period of the diagnosis period or an amount of change per unit period in the diagnosis period.

The multiple types of feature quantities regarding a change of the output signal of the downstream oxygen sensor in the diagnosis period may include at least one of an average, a median, a mode, the maximum value, the minimum value, an accumulative value, a dispersion, or a standard deviation of a value of the signal of the downstream oxygen sensor, per each unit period of the diagnosis period. The multiple types of feature quantities regarding a change of the signal of the downstream oxygen sensor in the diagnosis period may include a difference between the maximum value in each unit period of the diagnosis period and the minimum value in each unit period of the diagnosis period of the signal of the downstream oxygen sensor. The multiple types of feature quantities regarding a change of the signal of the downstream oxygen sensor in the diagnosis period may include a frequency indicating how often a value of the signal of the downstream oxygen sensor, which is obtained in each unit period of the diagnosis period, is at a specific value (e.g., mode).

The multiple types of feature quantities regarding a change of the signal of the downstream oxygen sensor in the diagnosis period may include at least one of a skewness, a kurtosis, the number of reversals, a trajectory length, an integral value, a cycle, a frequency, or an amplitude of the signal of the downstream oxygen sensor, which are calculated from a value of the signal of the downstream oxygen sensor in each unit period of the diagnosis period. The multiple types of feature quantities regarding a change of the output signal of the downstream oxygen sensor in the diagnosis period may include at least one of the ratio of the number of reversals, the ratio of a trajectory length, the ratio of an integral value, or the ratio of a frequency of the signal of the downstream oxygen sensor, which are calculated from a value of the signal of the downstream oxygen sensor in each unit period of the diagnosis period. The ratio of the trajectory length is, for example, the ratio of (i) a trajectory length when the signal of the downstream oxygen sensor is in a specific state to (ii) a trajectory length of the signal of the downstream oxygen sensor during the entire diagnosis period.

The multiple types of feature quantities regarding a change of the signal of the downstream oxygen sensor in the diagnosis period may include the ratio of (i) the length of a period in which the signal of the downstream oxygen sensor is in a specific state to (ii) the length of the diagnosis period, which is calculated from a value of the signal of the downstream oxygen sensor in each unit period of the diagnosis period.

In the present teaching and embodiments, the diagnostic data may be data regarding the Mahalanobis' distance based on a Mahalanobis-Taguchi Method (MT Method), in which multiple types of feature quantities regarding a change of the signal of the downstream oxygen sensor in the diagnosis period, which are generated based on sets of data per unit period obtained in the diagnosis period of the signal of the downstream oxygen sensor, are reflected. In this case, the Mahalanobis' distance is generated based on multiple types of feature quantities regarding a change of the signal of the downstream oxygen sensor in the diagnosis period. The data (diagnostic data) related to the Mahalanobis' distance may or may not be the Mahalanobis' distance per se. The Mahalanobis' distance indicates the distance from a reference data group. The reference data group may include a data group when the catalyst is normal, and may include a data group when the catalyst is deteriorated. The MT method is a method encompassed in the Mahalanobis-Taguchi system (MT system). In addition to the MT method, the MT system encompasses methods such as an MTA method and a RT method.

In the present teaching and embodiments, the diagnostic data may be data regarding the Mahalanobis' distance based on the MT method, which is generated based on a single type of the feature quantity regarding a change of the signal of the downstream oxygen sensor in the diagnosis period. In the present teaching and embodiments, the diagnostic data may be data generated by a method which is encompassed in the MT system but is not the MT method, based on at least one type of the feature quantity regarding a change of the signal of the downstream oxygen sensor in the diagnosis period. In the present teaching and embodiments, the diagnostic data may be data generated by a pattern recognition method different from the MT system, based on at least one type of the feature quantity regarding a change of the signal of the downstream oxygen sensor in the diagnosis period. In the present teaching and embodiments, the diagnostic data may be data different from the Mahalanobis' distance, which is generated based on multiple types of the feature quantities regarding a change of the signal of the downstream oxygen sensor in the diagnosis period. In the present teaching and embodiments, the diagnostic data may be data which is generated based on one type of the feature quantity regarding a change of the signal of the downstream oxygen sensor in the diagnosis period.

In the present teaching and embodiments, the catalyst deterioration diagnostic device for the flexible fuel engine is configured to diagnose the state of deterioration of the catalyst based on at least one set of diagnostic data. For example, when the diagnostic data is data indicating a single value, the state of deterioration of the catalyst may be diagnosed by comparing each of the at least one set of diagnostic data (single value) with a threshold. The catalyst deterioration diagnostic device may generate the diagnostic data for each of multiple diagnosis periods in one driving cycle. The catalyst deterioration diagnostic device may generate only a single set of diagnostic data for one diagnosis period in one driving cycle.

For example, it is possible to check whether control by the catalyst deterioration diagnostic device of an embodiment of the present teaching is being performed or not, by a method described below. This method utilizes an external scanning tool. The external scanning tool is a device configured to read, from the catalyst deterioration diagnostic device, a result of diagnosis of deterioration of the catalyst, information used for the diagnosis of deterioration of the catalyst, driving conditions when the diagnosis was performed, or the like. The information used for the diagnosis includes a determination value and a threshold with which the determination value is compared in the diagnosis of deterioration of the catalyst. The driving conditions when the diagnosis was performed are, for example, an engine rotation speed, an intake air amount, and an intake pressure.

In order to obtain increase and decrease of the flexible fuel amount, a measurement device such as an oscilloscope or a data logger is connected to a wire of the flexible fuel supplier. In order to obtain a change of the output signals of the upstream oxygen sensor and the downstream oxygen sensor, the above-described measurement device is connected to a wire of each of the upstream oxygen sensor and the downstream oxygen sensor. In the diagnosis period, when the catalyst deterioration diagnostic device controls the flexible fuel supplier so that at least one of the cycle or amplitude of increase and decrease of the supplied amount of the flexible fuel is larger than at least one of the cycle or amplitude of increase and decrease of the flexible fuel amount in a period in which the mixture ratio of the flexible fuel is equal to the mixture ratio of the flexible fuel in this diagnosis period in which the flexible fuel supplier is controlled not for diagnosing the state of deterioration of the catalyst, it is possible to estimate the diagnosis period based on increase and decrease of the flexible fuel amount and a change of the output signal of the upstream oxygen sensor. In order to further reliably estimate the diagnosis period, the above-described measurement device is connected to a wire of an ignition device of the engine. In the diagnosis period, the catalyst deterioration diagnostic device may control the ignition device so that an ignition timing is different from an ignition timing in a period in which the mixture ratio of the flexible fuel is equal to the mixture ratio of the flexible fuel in this diagnosis period and the flexible fuel supplier is controlled not for diagnosing the state of deterioration of the catalyst. In this case, it is possible to estimate the diagnosis period based on a change of the ignition timing. When the device on which the engine is mounted is a vehicle, the vehicle may include a warning lamp that is turned on when the catalyst deterioration diagnostic device determines that the catalyst is deteriorated. It is possible to estimate the timing of the end of the diagnosis period with reference to the timing of turning on of the warning lamp.

While the above-described measurement device performs monitoring, a test of running the flexible fuel engine in a state in which a deteriorated catalyst is provided is performed. When the external scanning tool confirms that the catalyst deterioration diagnostic device correctly diagnoses the state of deterioration of the catalyst, the diagnosis period is estimated based on a monitoring result of the measurement device and the warning lamp. The test is similarly performed with a different mixture ratio of the flexible fuel. Based on the monitoring result of the measurement device, (i) whether at least one of the cycle or amplitude of the output signal of the downstream oxygen sensor is changed on account of a change of the mixture ratio of the flexible fuel in the estimated diagnosis period and (ii) whether the diagnosis is correctly done even when at least one of the cycle or amplitude of the output signal of the downstream oxygen sensor is changed on account of a change of the mixture ratio of the flexible fuel in the estimated diagnosis period are checked. When both determination (i) and (ii) are confirmed, a test using a simulator for generating a pseudo-signal is performed. The simulator is provided at an intermediate part of a wire to which a signal is output from the downstream oxygen sensor. Instead of the signal of the downstream oxygen concentration sensor, a combined signal that is a combination of the signal of the downstream oxygen concentration sensor and a pseudo-signal generated by the simulator is input to the catalyst deterioration diagnostic device. The simulator is controlled so that the number of reversals of the combined signal is smaller than the number of reversals of the output signal of the upstream oxygen sensor, and whether the diagnosis is correctly done is checked. When the diagnosis is correctly done, the following test is performed.

While the above-described measurement device performs monitoring, a test of running the flexible fuel engine in a state in which a normal catalyst is provided is performed. The above-described simulator is used in this test. The simulator is controlled so that a combined signal of the signal of the downstream oxygen sensor and a pseudo-signal generated by the simulator is reversed at least once with a cycle larger than or an amplitude smaller than that of the signal of the downstream oxygen sensor when the catalyst is deteriorated, and whether the diagnosis is correctly done is checked. When the diagnosis is correctly done, it is estimated that the control has been performed by the catalyst deterioration diagnostic device of the embodiment of the present teaching.

In the present teaching and embodiments, at least one of multiple options encompasses all conceivable combinations of the options. At least one of multiple options may be one of the options, some of the options, or all of the options. For example, at least one of A, B, or C indicates only A, only B, only C, A and B, A and C, B and C, or A, B, and C.

In the present teaching, when the number of constituent features is not clearly specified and the constituent feature is expressed in a singular form in English, the number of the constituent features may be more than one in the present teaching. In the present teaching, the number of the constituent features may be only one.

In the present teaching and embodiments, terms "including", "having", "comprising", and derivatives thereof are used to encompass not only listed items and equivalents thereof but also additional items.

Unless defined otherwise, all terms (including technical and scientific terms) used in this description and the present teaching have the same meaning as commonly understood by one of ordinary skill in the art to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

As used herein, the term "preferred" is non-exclusive. The term "preferable" means "preferable but not limited to". In the present specification, the configuration described as "preferable" exhibits at least the above effect obtained by the present teaching.

In addition, in the present specification, the term "may" is non-exclusive. "May be" means "may be but not limited to". In the present specification, "may" implicitly encompasses "may not". In this specification, an arrangement which is explained by using the term "may" exerts at least the above-described effects of the present teaching.

Before the embodiments of the present teaching are detailed, it is informed that the present teaching is not limited to the configurations and layout of constituent features described below and/or shown in drawings. The present teaching is also applicable to embodiments other than the embodiments described later. The present teaching may be implemented as an embodiment other than the below-described embodiment.

### [Advantageous Effects]

The catalyst deterioration diagnostic device for the flexible fuel engine of the present teaching makes it possible to provide a catalyst deterioration diagnostic device for a flexible fuel engine, which is different from the known catalyst deterioration diagnostic device for the flexible fuel engine and is capable of not only improving the accuracy of the diagnosis of deterioration of a catalyst in an engine using fuel in which alcohol is mixed with gasoline but also further improving the accuracy of the diagnosis of deterioration of the catalyst in the engine using fuel in which alcohol is mixed with gasoline by being combined with the known catalyst deterioration diagnostic device.

### [Brief Description of Drawings]

FIG. 1 illustrates a catalyst deterioration diagnostic device for a flexible fuel engine of a First Embodiment.
FIG. 2 illustrates control of a flexible fuel amount by a catalyst deterioration diagnostic device for a flexible fuel engine of a Second Embodiment.
Each of FIG. 3(a) and FIG. 3(b) illustrates control of a flexible fuel amount by a catalyst deterioration diagnostic device for a flexible fuel engine of a Third Embodiment.
FIG. 4(a) and FIG. 4(b) illustrate control of flexible fuel amounts by catalyst deterioration diagnostic devices for flexible fuel engines of a Fourth Embodiment and Fifth Embodiment.
Each of FIG. 5(a) and FIG. 5(b) illustrates control of a flexible fuel amount by a catalyst deterioration diagnostic device for a flexible fuel engine of a Sixth Embodiment.
FIG. 6 is a flow chart showing the steps of execution of a diagnosis process of the catalyst deterioration diagnostic device of a Sixth Embodiment.
FIG. 7 shows the characteristics of a signal of an upstream oxygen sensor of each of a Seventh Embodiment and Eighth Embodiment.
Each of FIG. 8(a) and FIG. 8(b) illustrates control of a flexible fuel amount by a catalyst deterioration diagnostic device for a flexible fuel engine of a Seventh Embodiment.
FIG. 9 is a flow chart showing the steps of execution of a diagnosis process of the catalyst deterioration diagnostic device of a Seventh Embodiment.
FIG. 10 illustrates control of a flexible fuel amount by a catalyst deterioration diagnostic device for a flexible fuel engine of a Eighth Embodiment.
FIG. 11 illustrates control of a flexible fuel amount by a catalyst deterioration diagnostic device for a flexible fuel engine of each of a Ninth Embodiment and a Tenth Embodiment.

### [Description of Embodiments]

### <First Embodiment>

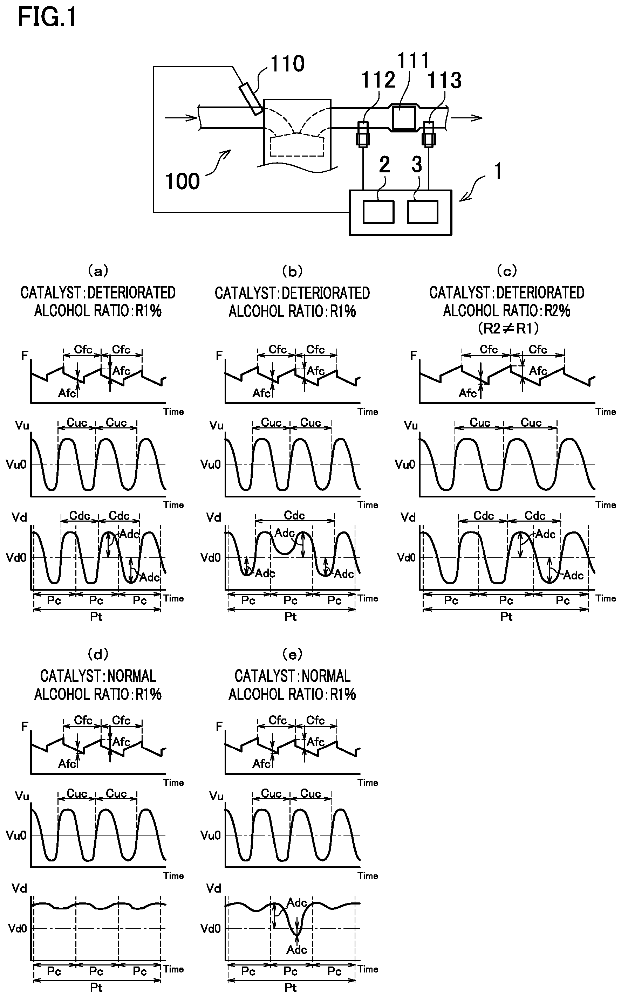

The following will describe a catalyst deterioration diagnostic device 1 (hereinafter, a diagnostic device 1) for a flexible fuel engine of the First Embodiment of the present teaching with reference to FIG. 1. It is noted that each of the below-described embodiments encompasses the features of the First Embodiment. As shown in FIG. 1, the diagnostic device 1 is used for a flexible fuel engine 100 configured to burn flexible fuel. The flexible fuel engine 100 includes: a flexible fuel supplier 110 configured to supply flexible fuel having different mixture ratios, in which gasoline and alcohol are mixed at different ratios; a catalyst 111 configured to purify exhaust gas generated after the combustion of the supplied flexible fuel; a front sensor 112 configured to detect the state of the exhaust gas before passing through the catalyst 111; and a rear sensor 113 configured to detect the state of the exhaust gas after passing through the catalyst 111. The diagnostic device 1 includes a processor 2 which is configured to perform a diagnosis process of diagnosing the state of deterioration of the catalyst 111 based on at least a signal of the rear sensor 113. The diagnostic device 1 includes at least a storage device 3. The storage device 3 includes a non-transitory storage medium storing a program instruction for performing the diagnosis process and the control of the flexible fuel supplier 110.

The front sensor 112 is an upstream oxygen sensor 112 which is configured to output a signal which is reversed between a rich state and a lean state indicating that the oxygen concentration is higher than that in the rich state, in accordance with increase and decrease of the oxygen concentration in exhaust gas before passing through the catalyst 111. The rich state of the signal of the upstream oxygen sensor 112 is, for example, a state in which a value Vu of the signal of the upstream oxygen sensor 112 is larger than a value Vu0. In this case, the lean state of the signal of the upstream oxygen sensor 112 is a state in which the value Vu of the signal of the upstream oxygen sensor 112 is equal to or smaller than the value Vu0. In the graphs used in the present embodiment and later-described other embodiments, the lower the oxygen concentration is, the higher the value of the signal of the upstream oxygen sensor 112 is. However, the arrangement of the upstream oxygen sensor 112 is not limited to this. The rear sensor 113 is a downstream oxygen sensor 113 which is configured to output a signal which is reversed between the first state and the second state in which the oxygen concentration is higher than that in the first state, when the oxygen concentration in exhaust gas having passed through the catalyst 111 increases and decreases in such a way that a state in which the oxygen concentration is lower than a predetermined range and a state in which the oxygen concentration is higher than the predetermined range are repeatedly alternated. The first state of the signal of the downstream oxygen sensor 113 is, for example, a state in which a value Vd of the signal of the downstream oxygen sensor 113 is larger than a value Vd0. In this case, the second state of the signal of the downstream oxygen sensor 113 is a state in which the value Vd of the signal of the downstream oxygen sensor 113 is equal to or smaller than the value Vd0.

In the diagnosis process, the diagnostic device 1 diagnoses the state of deterioration of the catalyst 111 based on the signal of the downstream oxygen sensor 113 in at least one diagnosis period Pc. In the diagnosis period Pc, the diagnostic device 1 sets a cycle Cfc and an amplitude Afc of increase and decrease of a flexible fuel amount F in the diagnosis period Pc and controls the flexible fuel supplier 110 either (I) without being based on the signal of the downstream oxygen sensor 113 but based on at least the signal of the upstream oxygen sensor 112 and the mixture ratio of the flexible fuel or (II) based on at least the signal of the upstream oxygen sensor 112 and the signal of the downstream oxygen sensor 113. The diagnosis period Pc has a length equal to or longer than one cycle of the signal of the upstream oxygen sensor 112 during execution of the diagnosis process, and has a length such that one driving cycle includes multiple diagnosis periods Pc. In a period that is a combination of multiple diagnosis periods Pc, the diagnostic device 1 sets the cycle Cfc and amplitude Afc of increase and decrease of the flexible fuel amount F during the diagnosis period Pc so that the signal of the downstream oxygen sensor 113 when the catalyst 111 is deteriorated is reversed multiple times irrespective of (I) a difference in the mixture ratio of the flexible fuel and (II) a difference in at least one of a cycle Cdc or amplitude Adc of the signal of the downstream oxygen sensor 113 due to a difference in the mixture ratio of the flexible fuel, and the signal of the downstream oxygen sensor 113 when the catalyst 111 is normal is either (i) maintained in the first state without being reversed to the second state or (ii) reversed at least once with at least one of a cycle Cdc that is large or an amplitude Adc that is small compared to the signal of the downstream oxygen sensor 113 when the catalyst 111 is deteriorated, irrespective of the mixture ratio of the flexible fuel. The period that is a combination of multiple diagnosis periods Pc is not limited to a combination of continuous diagnosis periods Pc. The diagnostic device 1 sets the cycle Cfc and the amplitude Afc so that, in one diagnosis period Pc, the signal of the downstream oxygen sensor 113 when the catalyst 111 is deteriorated is basically reversed multiple times irrespective of the mixture ratio of the flexible fuel, and the signal of the downstream oxygen sensor 113 when the catalyst 111 is normal is basically maintained in the first state irrespective of the mixture ratio of the flexible fuel.

The diagnostic device 1 generates a single set of diagnostic data based on the signal of the downstream oxygen sensor 113 in the diagnosis period Pc, (i) even when at least one of the cycle Cdc or amplitude Adc of the signal of the downstream oxygen sensor 113 in the diagnosis period Pc is different due to a difference in the mixture ratio of the flexible fuel, (ii) even when the number of reversals of the signal of the downstream oxygen sensor 113 in the diagnosis period Pc is smaller than the number of reversals of the signal of the upstream oxygen sensor 112 in the diagnosis period Pc, when the catalyst 111 is deteriorated, and (iii) even when the signal of the downstream oxygen sensor 113 is reversed in the diagnosis period Pc when the catalyst 111 is normal.

The diagnostic device 1 is configured to diagnose the state of deterioration of the catalyst 111 based on at least one set of diagnostic data generated based on the signal of the downstream oxygen sensor 113 in a total diagnosis period Pt including at least one diagnosis period Pc. The total diagnosis period Pt has a length equal to or longer than any two cycles of the signal of the upstream oxygen sensor 112. On this account, the features of the respective signals of the downstream oxygen sensor 113 when the catalyst 111 is normal and when the catalyst 111 is deteriorated are reflected in the signal of the downstream oxygen sensor 113 in the total diagnosis period Pt, (i) even when at least one of the cycle Cdc or amplitude Adc of the signal of the downstream oxygen sensor 113 in the diagnosis period Pc is different due to a difference in the mixture ratio of the flexible fuel, (ii) even when the number of reversals of the signal of the downstream oxygen sensor 113 in the diagnosis period Pc is smaller than the number of reversals of the signal of the upstream oxygen sensor 112 in the diagnosis period Pc, when the catalyst 111 is deteriorated, and (iii) even when the signal of the downstream oxygen sensor 113 is reversed in the diagnosis period Pc when the catalyst 111 is normal. Due to this, it is possible to diagnose the state of deterioration of the catalyst 111 based on at least one set of diagnostic data generated based on the signal of the downstream oxygen sensor 113 in the total diagnosis period Pt.

FIG. 1 shows five examples (a), (b), (c), (d), and (e) of changes over time for the flexible fuel amount F, the value Vu of the signal of the upstream oxygen sensor 112, and the value Vd of the signal of the downstream oxygen sensor 113, when the catalyst 111 is deteriorated and when the catalyst 111 is normal. The graphs showing changes over time of the flexible fuel amount F in FIG. 1 indicate changes over time of a feedback correction coefficient. The same applies to other graphs showing changes over time of the flexible fuel amount F in the present application. The flexible fuel amount F is calculated by multiplying the basic flexible fuel amount by the feedback correction coefficient. The driving state of the flexible fuel engine 100 is equal between the five examples in FIG. 1. In the five examples in FIG. 1, the length of the diagnosis period Pc is substantially equal to one cycle of the upstream oxygen sensor 112. The length of the diagnosis period Pc is not limited to this. While in the five examples in FIG. 1 the total diagnosis period Pt is a combination of three continuous diagnosis periods Pc, the total diagnosis period Pt of the First Embodiment may not be arranged in this way.

FIG. 1(a), FIG. 1(b), and FIG. 1(c) show examples in each of which the catalyst 111 is deteriorated. As shown in FIG. 1(a) and FIG. 1(c), for example, the signal of the downstream oxygen sensor 113 when the catalyst 111 is normal is basically reversed multiple times in one diagnosis period Pc. In FIG. 1(a) and FIG. 1(c), the signal of the downstream oxygen sensor 113 is reversed multiple times in each of three diagnosis periods Pc. In FIG. 1(b), in the middle diagnosis period Pc among the three diagnosis periods Pc, the signal of the downstream oxygen sensor 113 is not reversed, and increases and decreases multiple times in the first state. The signal of the downstream oxygen sensor 113 is reversed multiple times in each of the remaining two diagnosis periods Pc. On this account, in FIG. 1(b), the signal of the downstream oxygen sensor 113 is reversed multiple times in a period that is a combination of at least two diagnosis periods Pc.

The cycle Cdc of the signal of the downstream oxygen sensor 113 shown in FIG. 1(b) is large compared to the cycle Cdc of the downstream oxygen sensor 113 shown in FIG. 1(a), and the amplitude Adc of the signal of the downstream oxygen sensor 113 shown in FIG. 1(b) is small compared to the amplitude Adc of the signal of the downstream oxygen sensor 113 shown in FIG. 1(a). The mixture ratio of the flexible fuel shown in FIG. 1(c) is different from the mixture ratio of the flexible fuel shown in FIG. 1(a). The alcohol ratio R2% of the flexible fuel shown in FIG. 1(c) may be higher than the alcohol ratio R1% of the flexible fuel shown in FIG. 1(a). The cycle Cdc of the signal of the downstream oxygen sensor 113 shown in FIG. 1(c) is larger than the cycle Cdc of the downstream oxygen sensor 113 shown in FIG. 1(a). FIG. 1(c) and FIG. 1(a) are different from each other in the cycle Cdc of the signal of the downstream oxygen sensor 113 due to a difference in the mixture ratio of the flexible fuel.

FIG. 1(d) and FIG. 1(e) show examples in each of which catalyst 111 is normal. As shown in FIG. 1(d), for example, the signal of the downstream oxygen sensor 113 when the catalyst 111 is normal is basically maintained in the first state and not reversed in the diagnosis period Pc. In FIG. 1(d), the signal of the downstream oxygen sensor 113 is maintained in the first state and not reversed in each of the three diagnosis periods Pc. In FIG. 1(e), in the middle diagnosis period Pc among the three diagnosis periods Pc, the signal of the downstream oxygen sensor 113 is reversed at least once (twice in the figure). The signal of the downstream oxygen sensor 113 is maintained in the first state and not reversed in the remaining two diagnosis periods Pc.

When the diagnostic device 1 sets the cycle Cfc and the amplitude Afc of increase and decrease of the flexible fuel amount F in the diagnosis period Pc without being based on the signal of the downstream oxygen sensor 113 but based on at least the signal of the upstream oxygen sensor 112 and the mixture ratio of the flexible fuel, the load of the diagnosis process on the diagnostic device 1 is reduced because the signal of the downstream oxygen sensor 113 is not used.

On the other hand, when the diagnostic device 1 sets the cycle Cfc and the amplitude Afc of increase and decrease of the flexible fuel amount F in the diagnosis period Pc based on at least the signal of the upstream oxygen sensor 112 and the signal of the downstream oxygen sensor 113, the following effect can be obtained. It is possible to set the cycle Cfc and the amplitude Afc of increase and decrease of the flexible fuel amount F so that the signal of the downstream oxygen sensor 113 when the catalyst 111 is deteriorated is further reliably reversed in a repeated manner irrespective of the difference of the mixture ratio of the flexible fuel amount, while avoiding the cycle Cfc and the amplitude Afc of increase and decrease of the flexible fuel amount F from becoming excessively large.

### <Second Embodiment>

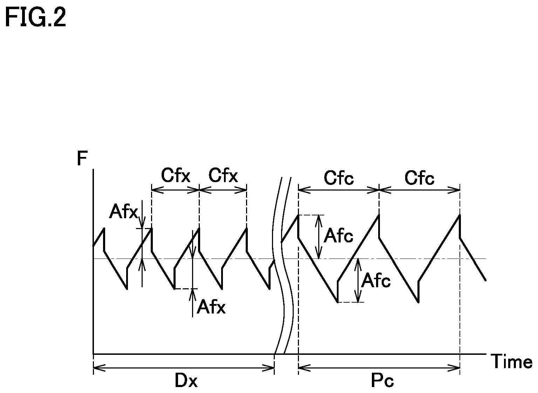

The following will describe a catalyst deterioration diagnostic device 1 (hereinafter, a diagnostic device 1) for a flexible fuel engine of the Second Embodiment of the present teaching with reference to FIG. 2. FIG. 2 shows an example of control of a flexible fuel amount F by a diagnostic device 1 of the Second Embodiment. The graph shown in FIG. 2 shows changes over time of the flexible fuel amount F. The diagnostic device 1 of the Second Embodiment controls a flexible fuel supplier 110 by setting a cycle Cfc and an amplitude Afc of increase and decrease of a flexible fuel amount F in a diagnosis period Pc either (I) without being based on the signal of the downstream oxygen sensor 113 but based on at least the signal of the upstream oxygen sensor 112 and the mixture ratio of the flexible fuel or (II) based on at least the signal of the upstream oxygen sensor 112 and the signal of the downstream oxygen sensor 113, so that at least one of the cycle Cfc or the amplitude Afc of increase and decrease of the flexible fuel amount F in the diagnosis period Oc is larger than at least one of a cycle Cfx or an amplitude Afx of increase and decrease of the flexible fuel amount F in a period Dx. The period Dx is a period which is without execution of the diagnosis process and in which the mixture ratio of the flexible fuel is equal to the mixture ratio of the flexible fuel in this diagnosis period Pc.

FIG. 2 shows an example of changes over time of the flexible fuel amount F in the diagnosis period Pc and the period Dx. The driving state of the flexible fuel engine 100 is equal between the diagnosis period Pc and the period Dx. In the example shown in FIG. 2, the flexible fuel supplier 110 controls the cycle Cfc and the amplitude Afc in the diagnosis period Pc to be larger than the cycle Cfx and the amplitude Afx in the period Dx, respectively. The Second Embodiment, however, is not limited to this arrangement. The length of the diagnosis period Pc is not limited to the length shown in FIG. 2. While the cycle Cfc in the diagnosis period Pc is constant in FIG. 2, the cycle Cfc may not be constant. While the cycle Cfx in the period Dx is constant in FIG. 2, the cycle Cfx may not be constant. While the amplitude Afc in the diagnosis period Pc is constant in FIG. 2, the amplitude Afc may not be constant. While the amplitude Afx in the period Dx is constant in FIG. 2, the amplitude Afx may not be constant.

### <Third Embodiment>

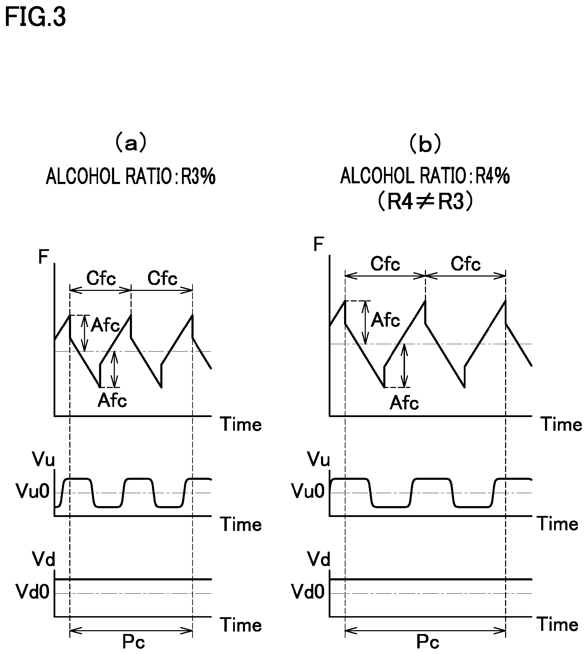

The following will describe a catalyst deterioration diagnostic device 1 (hereinafter, a diagnostic device 1) for a flexible fuel engine of the Third Embodiment of the present teaching with reference to FIG. 3(a) and FIG. 3(b). The diagnostic device 1 of the Third Embodiment may or may not have the features of the Second Embodiment. Each of FIG. 3(a) and FIG. 3(b) shows an example of control of a flexible fuel amount F by the diagnostic device 1 of the Third Embodiment. Each of FIG. 3(a) and FIG. 3(b) shows an example of changes over time of a flexible fuel amount F, a value Vu of a signal of an upstream oxygen sensor 112, and a value Vd of a signal of a downstream oxygen sensor 113 in two diagnosis periods Pc which are different from each other in the mixture ratio of the flexible fuel. FIG. 3(a) and FIG. 3(b) show examples in each of which the catalyst 111 is normal. The driving state of the flexible fuel engine 100 is equal between FIG. 3(a) and FIG. 3(b). In the diagnosis period Pc, the diagnostic device 1 of the Third Embodiment controls a flexible fuel supplier 110 by setting a cycle Cfc and an amplitude Afc of increase and decrease of the flexible fuel amount F in the diagnosis period Pc without being based on the signal of the downstream oxygen sensor 113 but based on at least the signal of the upstream oxygen sensor 112 and the mixture ratio of the flexible fuel. In the diagnosis period Pc, the diagnostic device 1 of the Third Embodiment sets the cycle Cfc and the amplitude Afc of increase and decrease of the flexible fuel amount F in the diagnosis period Pc so that at least one of the cycle Cfc or the amplitude Afc of increase and decrease of the supplied flexible fuel amount F is different in accordance with a difference in the mixture ratio of the flexible fuel.

In the examples shown in FIG. 3(a) and FIG. 3(b), the flexible fuel supplier 110 arranges both the cycle Cfc and the amplitude Afc of increase and decrease of the flexible fuel amount F to be different in accordance with a difference in the mixture ratio of the flexible fuel. However, the Third Embodiment is not limited to this arrangement. In the examples shown in FIG. 3(a) and FIG. 3(b), the cycle Cfc and the amplitude Afc in the diagnosis period Pc when the alcohol ratio of the flexible fuel is R3% are smaller than the cycle Cfc and the amplitude Afc in the diagnosis period Pc when the alcohol ratio of the flexible fuel is R4%. The alcohol ratio R4% may be higher than the alcohol ratio R3%. The length of the diagnosis period Pc is not limited to the lengths shown in FIG. 3(a) and FIG. 3(b). The length of the diagnosis period Pc may not depend on the cycle Cfc. In FIG. 3(a) and FIG. 3(b), the cycle Cfc is constant in both of the two diagnosis periods Pc. In the Third Embodiment, however, the cycle Cfc may not be constant in the diagnosis period Pc. In FIG. 3(a) and FIG. 3(b), the amplitude Afc is constant in both of the two diagnosis periods Pc. In the Third Embodiment, however, the amplitude Afc may not be constant in the diagnosis period Pc.

### <Fourth Embodiment>

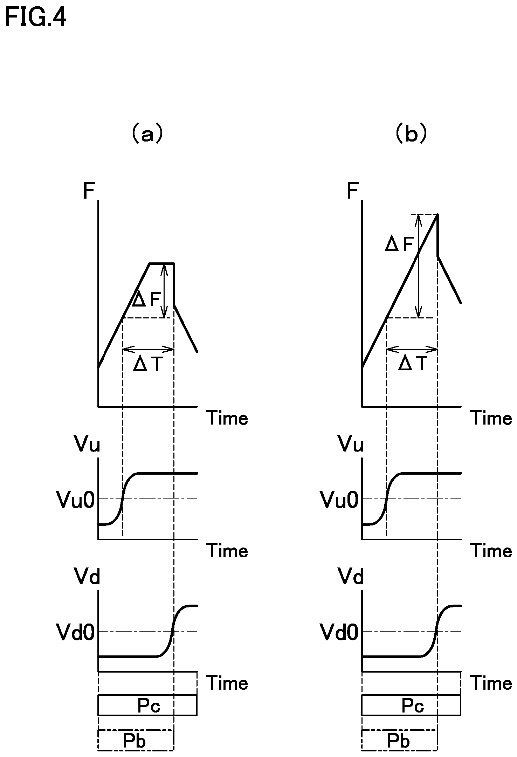

The following will describe a catalyst deterioration diagnostic device 1 (hereinafter, a diagnostic device 1) for a flexible fuel engine of the Fourth Embodiment of the present teaching with reference to FIG. 4(a) and FIG. 4(b). The diagnostic device 1 of the Fourth Embodiment may or may not have the features of the Second Embodiment. Each of FIG. 4(a) and FIG. 4(b) shows two examples of control of a flexible fuel amount F by the diagnostic device 1 of the Fourth Embodiment. Each of FIG. 4(a) and FIG. 4(b) also serve as examples of control of a flexible fuel amount F by a diagnostic device 1 of the later-described Fifth Embodiment. Each of FIG. 4(a) and FIG. 4(b) shows an example of changes over time of a flexible fuel amount F, a value Vu of a signal of an upstream oxygen sensor 112, and a value Vd of a signal of a downstream oxygen sensor 113 in part of the diagnosis period Pc of the Fourth Embodiment or in a later-described diagnosis preparation period Pb of the Fifth Embodiment. In the diagnosis period Pc, the diagnostic device 1 of the Fourth Embodiment controls a flexible fuel supplier 110 by setting a cycle Cfc and an amplitude Afc of increase and decrease of the flexible fuel amount F in the diagnosis period Pc based on at least the signal of the upstream oxygen sensor 112 and the signal of the downstream oxygen sensor 113. In the diagnosis period Pc, when the signal of the downstream oxygen sensor 113 is in a second state at a time point at which the signal of the upstream oxygen sensor 112 is reversed from a lean state to a rich state while the supplied flexible fuel amount F is increasing, the diagnostic device 1 of the Fourth Embodiment sets an increasing time ΔT and an increasing amount ΔF of the flexible fuel amount F from a time point at which the signal of the upstream oxygen sensor 112 is reversed from the lean state to the rich state in the diagnosis period Pc so that the supplied flexible fuel amount F does not decrease until the signal of the downstream oxygen sensor 113 is reversed from the second state to the first state. The diagnostic device 1 sets a cycle Cfc and an amplitude Afc in the diagnosis period Pc, in accordance with the increasing amount ΔF and the increasing time ΔT. The statement "the flexible fuel amount F does not decrease until the signal of the downstream oxygen sensor 113 is reversed to the first state" specifically indicates that, for example, after the flexible fuel amount F is increased to a predetermined amount, the flexible fuel amount F is maintained at the predetermined amount until the signal of the downstream oxygen sensor 113 is reversed to the first state, or the flexible fuel amount F is increased to a predetermined amount until the signal of the downstream oxygen sensor 113 is reversed to the first state. FIG. 4(a) shows an example of the former case whereas FIG. 4(b) shows an example of the latter case. In the diagnosis period Pc, when the signal of the downstream oxygen sensor 113 is in the first state at a time point at which the signal of the upstream oxygen sensor 112 is reversed from the lean state to the rich state while the supplied flexible fuel amount F is increasing, the diagnostic device 1 determines a timing to decrease the flexible fuel amount F without being based on the signal of the downstream oxygen sensor 113.

### <Fifth Embodiment>

The following will describe a diagnostic device 1 (hereinafter, a diagnostic device 1) of the Fifth Embodiment of the present teaching with reference to FIG. 4(a) and FIG. 4(b). The diagnostic device 1 of the Fifth Embodiment may or may not have the features of the Second Embodiment. The diagnostic device 1 of the Fifth Embodiment has the features of the Third Embodiment or the Fourth Embodiment. In the diagnosis preparation period Pb prior to the diagnosis period Pc, when the signal of the downstream oxygen sensor 113 is in the second state at a time point at which the signal of the upstream oxygen sensor 112 is reversed from the lean state to the rich state while the supplied flexible fuel amount F is increasing, the diagnostic device 1 of the Fifth Embodiment sets an increasing time ΔT and an increasing amount ΔF of the flexible fuel amount F from a time point at which the signal of the upstream oxygen sensor 112 is reversed from the lean state to the rich state in the diagnosis preparation period Pb based on at least the signal of the upstream oxygen sensor 112 and the signal of the downstream oxygen sensor 113 so that the supplied flexible fuel amount F does not decrease until the signal of the downstream oxygen sensor 113 is reversed from the second state to the first state. A specific example of not decreasing the flexible fuel amount F until the signal of the downstream oxygen sensor 113 is reversed to the first state is similar to the specific example described in the Fourth Embodiment.

### <Sixth Embodiment>

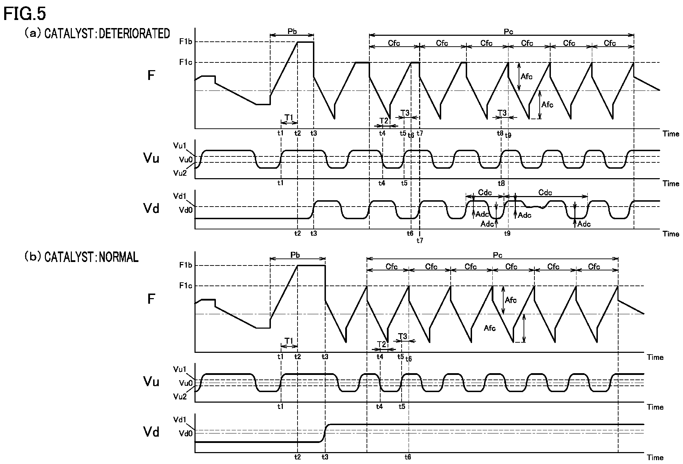

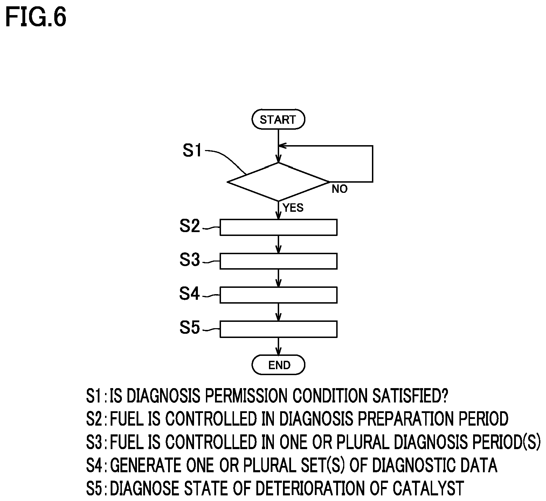

The following will describe a catalyst deterioration diagnostic device 1 (hereinafter, a diagnostic device 1) for a flexible fuel engine of the Sixth Embodiment of the present teaching with reference to FIG. 5(a), FIG. 5(b), and FIG. 6. The diagnostic device 1 of the Sixth Embodiment is an example of a diagnostic device 1 having the features of the Fourth Embodiment and the features of the Fifth Embodiment.

Each of FIG. 5(a) and FIG. 5(b) shows an example of control of a flexible fuel amount F by the diagnostic device 1 of the Sixth Embodiment. Each of FIG. 5(a) and FIG. 5(b) shows an example of changes over time of a flexible fuel amount F, a value Vu of a signal of an upstream oxygen sensor 112, and a value Vd of a signal of a downstream oxygen sensor 113 in a diagnosis period Pc. FIG. 5(a) shows an example in which the catalyst 111 is deteriorated, whereas FIG. 5(b) shows an example in which the catalyst 111 is normal. In the examples shown in FIG. 5(a) and FIG. 5(b), the diagnosis period Pc is six times as long as a cycle Cfc. The length of the diagnosis period Pc is not limited to this. The length of the diagnosis period Pc may not depend on the cycle Cfc. While FIG. 5 and FIG. 6 show the examples in which the diagnostic device 1 has the features of the Second Embodiment, the diagnostic device 1 of the Sixth Embodiment may not have the features of the Second Embodiment.

FIG. 6 is a flow chart showing an example of the steps of execution of a diagnosis process of the diagnostic device 1 of the Sixth Embodiment. This flow chart shows an example in which the total diagnosis period Pt is one diagnosis period Pc or multiple continuous diagnosis periods Pc. However, in the Sixth Embodiment, the total diagnosis period Pt may include multiple non-continuous diagnosis periods Pc. The diagnostic device 1 starts the process shown in FIG. 6 when the diagnostic device 1 is powered on or when an apparatus that is part of the diagnostic device 1 and mounted on the flexible fuel engine 100 is powered on. The flow chart shown in FIG. 6 is specifically described. To begin with, the diagnostic device 1 determines whether a diagnosis permission condition is established (step S1). When the diagnosis permission condition is established (YES in the step S1), the diagnosis process starts. To begin with, the diagnostic device 1 performs control of the flexible fuel amount F in the diagnosis preparation period Pb (step S2). Thereafter, the diagnostic device 1 performs control of the flexible fuel amount F in one diagnosis period Pc or multiple diagnosis periods Pc (step S3). The diagnostic device 1 then generates one set or multiple sets of diagnostic data based on a signal of the downstream oxygen sensor 113 in the total diagnosis period Pt (one diagnosis period Pc or multiple diagnosis periods Pc) (step S4), and diagnoses the state of deterioration of the catalyst 111 based on the generated one set or multiple sets of diagnostic data (step S5).

Now, a specific example of the control of the flexible fuel amount F in the diagnosis preparation period Pb in the step S2 shown in FIG. 6 will be explained with reference to FIG. 5(a) and FIG. 5(b). In the diagnosis preparation period Pb, the diagnostic device 1 continuously determines whether the signal of the upstream oxygen sensor 112 is in the rich state, while increasing the flexible fuel amount F. For example, when the value Vu of the signal of the upstream oxygen sensor 112 indicates an oxygen concentration that is equal to or lower than a value Vu1 that is a rich determination threshold, the diagnostic device 1 determines that the signal of the upstream oxygen sensor 112 is in the rich state. In FIG. 5, the value Vu1 is larger than a value Vu0 that is the border between the rich state and the lean state. Until a predetermined waiting time T1 elapses from a time point t1 at which the signal of the upstream oxygen sensor 112 is determined to be in the rich state for the first time, the diagnostic device 1 increases the flexible fuel amount F irrespective of the signal of the downstream oxygen sensor 113. The diagnostic device 1 determines whether the signal of the downstream oxygen sensor 113 at a time point t2 after the elapse of the waiting time T1 is in the first state. For example, when the value Vd of the signal of the downstream oxygen sensor 113 indicates an oxygen concentration that is equal to or lower than a value Vd1 that is a first determination threshold, the diagnostic device 1 determines that the signal of the downstream oxygen sensor 113 is in the first state. In FIG. 5, the value Vd1 is larger than a value Vd0 that is the border between the first state and the second state. As shown in FIG. 5, when it is determined that the signal of the downstream oxygen sensor 113 is not in the first state at the time point t2, the diagnostic device 1 continuously determines whether the signal of the downstream oxygen sensor 113 is in the first state, while maintaining the flexible fuel amount F. Instead of maintaining the flexible fuel amount F, the flexible fuel amount F may be further increased. Thereafter, when the signal of the downstream oxygen sensor 113 is reversed from the second state to the first state, the diagnostic device 1 decreases the flexible fuel amount F from a time point t3 at which the signal of the downstream oxygen sensor 113 is determined to be in the first state for the first time. This is the end of the diagnosis preparation period Pb. On the other hand, although not illustrated, when the signal of the downstream oxygen sensor 113 is in the first state at the time point t2, the diagnostic device 1 immediately decreases the flexible fuel amount F from the time point t2. This is the end of the diagnosis preparation period Pb.

Now, a specific example of the control of the flexible fuel amount F in the diagnosis period Pc in the step S3 shown in FIG. 6 will be explained with reference to FIG. 5(a) and FIG. 5(b). In the diagnosis period Pc, the diagnostic device 1 increases and decreases the flexible fuel amount F. The decrease of the flexible fuel amount F will be explained first. The diagnostic device 1 continuously determines whether the signal of the upstream oxygen sensor 112 is in the lean state, while decreasing the flexible fuel amount F. For example, when the value Vu of the signal of the upstream oxygen sensor 112 reaches the value Vu2 that is the lean determination threshold, the diagnostic device 1 determines that the signal of the upstream oxygen sensor 112 is in the lean state. In FIG. 5, the value Vu2 is smaller than the value Vu0 that is the border between the rich state and the lean state. Until a predetermined waiting time T2 elapses from a time point (e.g., a time point t4 in FIG. 5(a) and FIG. 5(b)) at which the signal of the upstream oxygen sensor 112 is determined to be in the lean state for the first time, the diagnostic device 1 decreases the flexible fuel amount F irrespective of the signal of the downstream oxygen sensor 113. After the elapse of the waiting time T2, the diagnostic device 1 continuously determines whether the signal of the upstream oxygen sensor 112 is in the rich state, while increasing the flexible fuel amount F. Until a predetermined waiting time T3 elapses from a time point (e.g., a time point t5 in FIG. 5(a) and FIG. 5(b) or a time point t8 shown in FIG. 5(a)) at which the signal of the upstream oxygen sensor 112 is determined to be in the rich state for the first time, the diagnostic device 1 increases the flexible fuel amount F irrespective of the signal of the downstream oxygen sensor 113. The diagnostic device 1 determines whether the signal of the downstream oxygen sensor 113 is in the first state at a time point (e.g., a time point t6 in FIG. 5(a) and FIG. 5(b) or a time point t9 in FIG. 5(a)) after the elapse of the waiting time T3. When it is determined that the signal of the downstream oxygen sensor 113 is not in the first state at the time point after the elapse of the waiting time T3, the diagnostic device 1 continuously determines whether the signal of the downstream oxygen sensor 113 is in the first state, while maintaining the flexible fuel amount F. Instead of maintaining the flexible fuel amount F, the flexible fuel amount F may be further increased. Thereafter, when the signal of the downstream oxygen sensor 113 is reversed from the second state to the first state, the diagnostic device 1 decreases the flexible fuel amount F from a time point (e.g., a time point t7 shown in FIG. 5(a)) at which the signal of the downstream oxygen sensor 113 is determined to be in the first state for the first time. On the other hand, when the signal of the downstream oxygen sensor 113 is in the first state at a time point after the elapse of the waiting time T3, the diagnostic device 1 immediately decreases the flexible fuel amount F from the time point (e.g., a time point t9 shown in FIG. 5(a)) after the elapse of the waiting time T3. While the waiting time T2 is equal to the waiting time T3 in the example shown in FIG. 5, they may be different from each other.

In the example shown in FIG. 5, no matter whether the catalyst 111 is deteriorated or not, the amplitude Afc of increase and decrease of the flexible fuel amount F in the diagnosis period Pc is more or less constant. In the Sixth Embodiment, however, the amplitude Afc may not be constant.

Preferably, the diagnostic device 1 of the Sixth Embodiment sets the increasing time ΔT and the increasing amount ΔF of the flexible fuel amount F in the diagnosis preparation period Pb and the cycle Cfc and the amplitude Afc of increase and decrease of the flexible fuel amount F in the diagnosis period Pc so that the maximum value F1b of the flexible fuel amount F in the diagnosis preparation period Pb is larger than the maximum value Fc 1 of the flexible fuel amount F in the diagnosis period Pc. The diagnostic device 1 of the Sixth Embodiment, however, may not be structured in this way.

### <Seventh Embodiment and Eighth Embodiment>

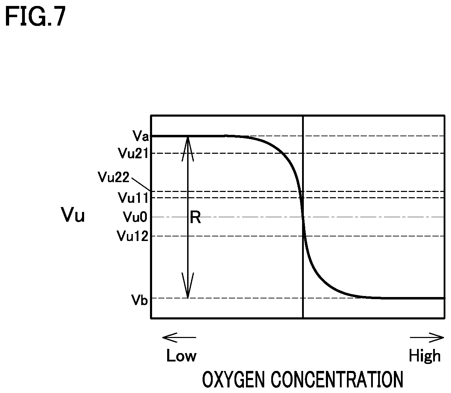

The following will describe a catalyst deterioration diagnostic device 1 (hereinafter, a diagnostic device 1) for a flexible fuel engine of each of the Seventh Embodiment and Eighth Embodiment of the present teaching with reference to FIG. 7, FIG. 8, FIG. 9, and FIG. 10. The diagnostic device 1 of the Seventh Embodiment is an example of a diagnostic device 1 having the features of the Fourth Embodiment. That is to say, the diagnostic device 1 of the Seventh Embodiment sets the cycle Cfc and the amplitude Afc of increase and decrease of the flexible fuel amount F in the diagnosis period Pc based on at least the signal of the upstream oxygen sensor 112 and the signal of the downstream oxygen sensor 113. The diagnostic device 1 of the Eighth Embodiment is an example of a diagnostic device 1 having the features of the Third Embodiment. That is to say, the diagnostic device 1 of the Eighth Embodiment sets the cycle Cfc and the amplitude Afc of increase and decrease of the flexible fuel amount F in the diagnosis period Pc without being based on the signal of the downstream oxygen sensor 113 but based on at least the signal of the upstream oxygen sensor 112 and the mixture ratio of the flexible fuel.

FIG. 7 shows the characteristics of the signal of the upstream oxygen sensor 112 of each of the Seventh Embodiment and Eighth Embodiment. In the graph of FIG. 7, the vertical axis indicates a value Vu of the signal of the upstream oxygen sensor 112, whereas the horizontal axis indicates the oxygen concentration. The upstream oxygen sensor 112 is configured to output a signal having a value equal to a first limit value Va when the oxygen concentration is lower than a predetermined concentration detection range R, to output a signal having a value equal to a second limit value Vb when the oxygen concentration is higher than the concentration detection range R, and to output a signal continuously changing between the first limit value Va and the second limit value Vb in accordance with the oxygen concentration when the oxygen concentration falls within the concentration detection range R. The upstream oxygen sensor 112 is a narrow band oxygen sensor.

When the flexible fuel amount F is controlled based on at least the signal of the upstream oxygen sensor 112, the diagnostic device 1 of each of the Seventh Embodiment and Eighth Embodiment determines a timing to decrease the supplied flexible fuel amount F at least with reference to a time point at which the value Vu of the signal of the upstream oxygen sensor 112 reaches a rich determination threshold VR in the concentration detection range R, and determines a timing to increase the supplied flexible fuel amount F at least with reference to a timing at which the value Vu of the signal of the upstream oxygen sensor 112 reaches a lean determination threshold VL in the concentration detection range R. The lean determination threshold VL is a value indicating an oxygen concentration equal to or higher than the rich determination threshold VR. In the explanation below, the rich determination threshold VR and the lean determination threshold VL may be referred to as a determination threshold VR and a determination threshold VL.

In a threshold changing period Pd before the diagnosis period Pc, the diagnostic device 1 of each of the Seventh Embodiment and later-described Eighth Embodiment changes the determination thresholds VR and VL to be closer to the first limit value Va until the downstream oxygen sensor 113 outputs a signal in the first state. The determination thresholds VR and VL are changed stepwise until the downstream oxygen sensor 113 outputs the signal in the first state.

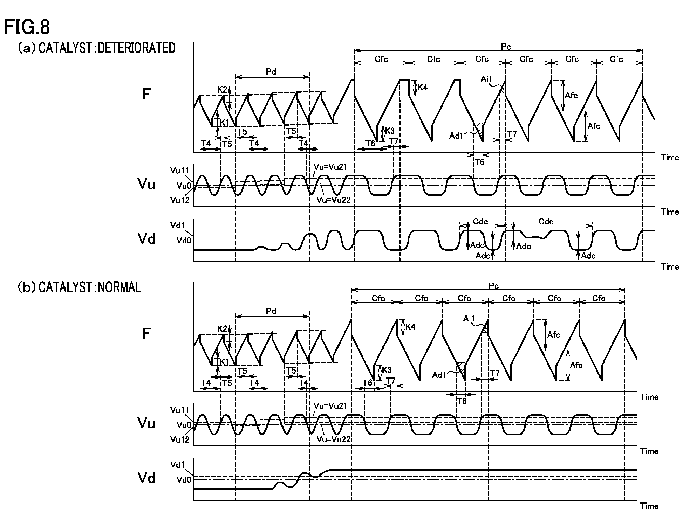

Each of FIG. 8(a) and FIG. 8(b) shows an example of control of the flexible fuel amount F by the diagnostic device 1 of the Seventh Embodiment. Each of FIG. 8(a) and FIG. 8(b) shows an example of changes over time of the flexible fuel amount F, the value Vu of the signal of the upstream oxygen sensor 112, and the value Vd of the signal of the downstream oxygen sensor 113 in the threshold changing period Pd and the diagnosis period Pc. FIG. 8(a) shows an example in which the catalyst 111 is deteriorated, whereas FIG. 8(b) shows an example in which the catalyst 111 is normal. The length of the diagnosis period Pc in the Seventh Embodiment is not limited to the lengths shown in FIG. 8(a) and FIG. 8(b). While in examples in FIG. 8(a) and FIG. 8(b) the diagnostic device 1 has the features of the Second Embodiment, the diagnostic device 1 of the Seventh Embodiment may not have the features of the Second Embodiment.

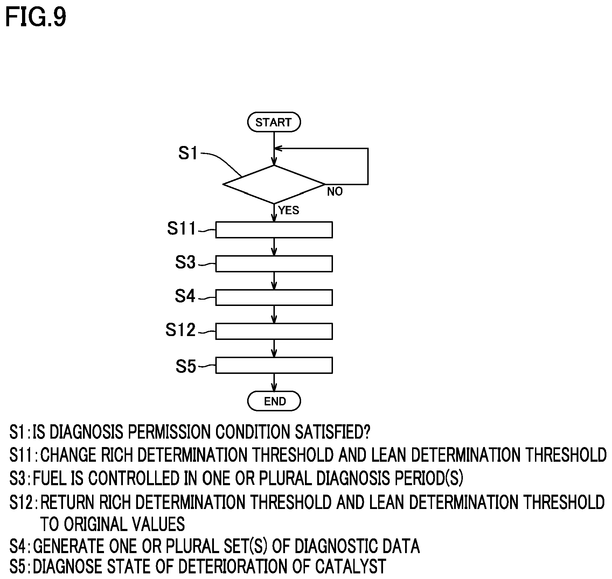

FIG. 9 is a flow chart showing an example of the steps of execution of a diagnosis process of the diagnostic device 1 of each of the Seventh Embodiment and Eighth Embodiment. This flow chart shows an example in which the total diagnosis period Pt is one diagnosis period Pc or multiple continuous diagnosis periods Pc. However, in the Seventh Embodiment, the total diagnosis period Pt may include multiple non-continuous diagnosis periods Pc. The following will describe only differences of a flow chart of FIG. 9 from the flow chart of FIG. 6 related to the Sixth Embodiment. When a diagnosis permission condition is established (YES in the step S1), the diagnostic device 1 brings the rich determination threshold VR and the lean determination threshold VL to be closer to the first limit value Va until the downstream oxygen sensor 113 outputs the signal in the first state, while controlling the flexible fuel amount F based on the signal of the upstream oxygen sensor 112 and the signal of the downstream oxygen sensor 113 (step S11). After generating one set or multiple sets of diagnostic data in the step S4, the diagnostic device 1 returns the rich determination threshold VR and the lean determination threshold VL to the original values (step S12).

The diagnostic device 1 of each of the Seventh Embodiment and Eighth Embodiment may perform the diagnosis process through steps different from those of the flow chart of FIG. 9. For example, the diagnostic device 1 may perform the process of bringing the rich determination threshold VR and the lean determination threshold VL to be closer to the first limit value Va, no matter whether the diagnosis process is performed or not. In this case, the step S11 and the step S12 in the flow chart of FIG. 9 are not performed, and in place of these steps, a condition of determining whether a process of bringing the rich determination threshold VR and the lean determination threshold VL to be closer to the first limit value Va until the downstream oxygen sensor 113 outputs the signal in the first state has been performed is added to the diagnosis permission condition in the step S1.

Now, a specific example of the control of the flexible fuel amount F of the Seventh Embodiment in the threshold changing period Pd in the step S11 shown in FIG. 9 will be explained with reference to FIG. 8(a) and FIG. 8(b). In a period immediately before the threshold changing period Pd and in the threshold changing period Pd, the diagnostic device 1 periodically increases and decreases the flexible fuel amount F. In the example shown in FIG. 8, the method of setting the flexible fuel amount F is equal between the period immediately before the threshold changing period Pd and the threshold changing period Pd, except the values of the determination thresholds VR and VL. When the value Vu of the signal of the upstream oxygen sensor 112 reaches the lean determination threshold VL while the flexible fuel amount F is decreasing, the diagnostic device 1 further decreases the flexible fuel amount F until a predetermined waiting time T4 elapses. When the waiting time T4 elapses, the flexible fuel amount F is increased by a skip amount K1, and then the flexible fuel amount F is increased at a predetermined time change rate ω1. When the value Vu of the signal of the upstream oxygen sensor 112 reaches the rich determination threshold VR while the flexible fuel amount F is increasing, the diagnostic device 1 further increases the flexible fuel amount F until a predetermined waiting time T5 elapses. When the waiting time T5 elapses, the flexible fuel amount F is decreased by a skip amount K2, and then the flexible fuel amount F is decreased at a predetermined time change rate ω2. While in the example of FIG. 8 the waiting time T4, the skip amount K1, and the time change rate ω1 are equal to the waiting time T5, the skip amount K2, and the time change rate ω2, respectively, they may be different from each other.

In the period immediately before the threshold changing period Pd, the rich determination threshold VR is a value Vu11 and the lean determination threshold VL is a value Vu12. At the start of the threshold changing period Pd, the diagnostic device 1 changes the rich determination threshold VR and the lean determination threshold VL to be closer to the first limit value Va. While in FIG. 8 the determination thresholds VR and VL are changed at the timing of changing the decreasing tendency of the flexible fuel amount F to the increasing tendency, the timing of the change is not limited to this. After the start of the threshold changing period Pd, the diagnostic device 1 continuously determines whether the signal of the downstream oxygen sensor 113 is in the first state. For example, when the value Vd of the signal of the downstream oxygen sensor 113 indicates an oxygen concentration that is equal to or lower than a value Vd1 that is a first determination threshold, the diagnostic device 1 determines that the signal of the downstream oxygen sensor 113 is in the first state. As the determination thresholds VR and VL are brought to be closer to the first limit value Va, the center of fluctuation of the increase and decrease of the flexible fuel amount F increases, and the time in which the air-fuel mixture is rich becomes long. This makes it easier for the downstream oxygen sensor 113 to output a first state signal. When the signal of the downstream oxygen sensor 113 is not determined to be in the first state even when a predetermined time elapses from the time point at which the determination thresholds VR and VL are changed for the first time, the determination thresholds VR and VL are brought to be further closer to the first limit value Va. As this step is repeated, the determination thresholds VR and VL are brought to be closer to the first limit value Va stepwise, until the signal of the downstream oxygen sensor 113 is determined to be in the first state. While in FIG. 8 the predetermined period is one cycle of increase and decrease of the flexible fuel amount F, the disclosure is not limited to this arrangement. When it is determined that the signal of the downstream oxygen sensor 113 is in the first state, the threshold changing period Pd ends. In the examples shown in FIG. 8(a) and FIG. 8(b), the rich determination threshold VR and the lean determination threshold VL at the end of the threshold changing period Pd are a value Vu21 and a value Vu22.

Now, a specific example of the control of the flexible fuel amount F of the Seventh Embodiment in the diagnosis period Pc in the step S3 shown in FIG. 9 will be explained with reference to FIG. 8(a) and FIG. 8(b). The method of setting the flexible fuel amount F in the diagnosis period Pc in FIG. 8 is equal to the method of setting the flexible fuel amount F in the diagnosis period Pc of the Sixth Embodiment shown in FIG. 5, except the below-described three differences. The first difference is the rich determination threshold and the lean determination threshold. The second difference is the length of the waiting time of continuation of decrease of the flexible fuel amount F after the value Vu of the signal of the upstream oxygen sensor 112 reaches the lean determination threshold while the flexible fuel amount F is decreasing. In the example shown in FIG. 8, a waiting time T6 of continuation of decrease of the flexible fuel amount F after the value Vu of the signal of the upstream oxygen sensor 112 reaches the lean determination threshold VL is longer than the waiting time T2 in the example shown in FIG. 5. The third difference is the length of the waiting time of continuation of increase of the flexible fuel amount F after the value Vu of the signal of the upstream oxygen sensor 112 reaches the rich determination threshold VR while the flexible fuel amount F is increasing. In the example shown in FIG. 8, a waiting time T7 of continuation of increase of the flexible fuel amount F after the value Vu of the signal of the upstream oxygen sensor 112 reaches the rich determination threshold VR is shorter than the waiting time T3 in the example shown in FIG. 5. The waiting time T7 is shorter than the waiting time T6.

The method of setting the flexible fuel amount F in an example shown in FIG. 8 will be further detailed. When the waiting time T6 elapses, the diagnostic device 1 increases the flexible fuel amount F by a skip amount K3, and then increases the flexible fuel amount F at a predetermined time change rate ω3. When the waiting time T7 elapses and it is determined that the signal of the downstream oxygen sensor 113 is in the first state, the diagnostic device 1 decreases the flexible fuel amount F by the skip amount K4, and then decreases the flexible fuel amount F at a predetermined time change rate ω4. In the example of FIG. 8, the skip amount K3 and the time change rate ω3 are equal to the skip amount K4 and the time change rate ω4, respectively.

In the graphs of the flexible fuel amount F shown in FIG. 8(a) and FIG. 8(b), the area Ad1 of a hatched region indicates an integral value of a decreasing amount of the flexible fuel amount F until the flexible fuel amount F is increased after the value Vu of the signal of the upstream oxygen sensor 112 reaches the lean determination threshold VL (e.g., the value Vu22). In the graphs of the flexible fuel amount F shown in FIG. 8(a) and FIG. 8(b), the area Ai1 of a hatched region indicates an integral value of an increasing amount of the flexible fuel amount until the flexible fuel amount F is decreased after the value Vu of the signal of the upstream oxygen sensor 112 reaches the rich determination threshold VR (e.g., the value Vu21), in a case where the signal of the downstream oxygen sensor 113 is in the first state when the value Vu of the signal of the upstream oxygen sensor 112 reaches the rich determination threshold VR (e.g., the value Vu21). The area Ad1 is larger than the area Ai1.

In the Seventh Embodiment, the integral value (area Ad1) of the decreasing amount of the flexible fuel amount F until the flexible fuel amount F is increased after the value Vu of the signal of the upstream oxygen sensor 112 reaches the lean determination threshold VL is preferably larger than the integral value (area Ai1) of the increasing amount of the flexible fuel amount F until the flexible fuel amount F is decreased after the value Vu of the signal of the upstream oxygen sensor 112 reaches the rich determination threshold VR when the signal of the downstream oxygen sensor 113 is maintained in the first state. In the Seventh Embodiment, however, the magnitude relationship between the integral values may be different from this.

Due to the magnitude relationship between the integral values, it is possible to suppress the center of fluctuation of the increase and decrease of the flexible fuel amount F in the diagnosis period Pc from being away from the center of fluctuation of the increase and decrease of the flexible fuel amount F in the period prior to the threshold changing period Pd. It is therefore possible to perform highly precise diagnosis of deterioration, while suppressing a change in the components of the exhaust gas discharged to the atmospheric air in the diagnosis period Pc.

In the example of FIG. 8, the above-described magnitude relationship between the integral values is achieved in such a way that the skip amount K3 and the time change rate ω3 are arranged to be equal to the skip amount K4 and the time change rate ω4, respectively, and the waiting time T6 is arranged to be longer than the waiting time T7. However, the method of achieving this magnitude relationship is not limited to this. For example, the above-described magnitude relationship between the integral values may be achieved in such a way that the waiting time T6 and the waiting time T7 are arranged to be equal to each other and either the skip amount K3 or the time change rate ω3 is differentiated from the respective skip amount K4 or the time change rate ω4. Furthermore, the above-described magnitude relationship between the integral values may be achieved in such a way that at least two of the waiting time T6, the skip amount K3, and the time change rate ω3 are differentiated from the waiting time T7, the skip amount L4, and the time change rate ω4.

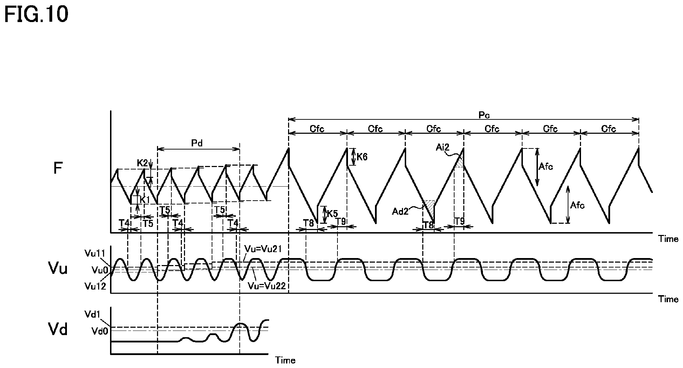

FIG. 10 shows an example of control of the flexible fuel amount F by the diagnostic device 1 of the Eighth Embodiment. FIG. 10 shows an example of changes over time of the flexible fuel amount F and the value Vu of the signal of the upstream oxygen sensor 112 in the threshold changing period Pd and the diagnosis period Pc. In addition to this, FIG. 10 shows an example of changes over time of the value Vd of the signal of the downstream oxygen sensor 113 in the threshold changing period Pd. The length of the diagnosis period Pc in the Eighth Embodiment is not limited to the length shown in FIG. 10. While in the example in FIG. 10 the diagnostic device 1 has the features of the Second Embodiment, the diagnostic device 1 of the Eighth Embodiment may not have the features of the Second Embodiment. A specific example of the control of the flexible fuel amount F of the Eighth Embodiment in the threshold changing period Pd in the step S11 shown in FIG. 9 is equal to the specific example in the Seventh Embodiment.

Now, a specific example of the control of the flexible fuel amount F of the Eighth Embodiment in the diagnosis period Pc in the step S3 shown in FIG. 9 will be explained with reference to FIG. 10. When the value Vu of the signal of the upstream oxygen sensor 112 reaches the lean determination threshold VL (value Vu22 in FIG. 10) while the flexible fuel amount F is decreasing, the diagnostic device 1 decreases the flexible fuel amount F until a predetermined waiting time T8 elapses. When the waiting time T8 elapses, the flexible fuel amount F is increased by a skip amount K5, and then the flexible fuel amount F is increased at a predetermined time change rate ω5. When the value Vu of the signal of the upstream oxygen sensor 112 reaches the rich determination threshold VR (value Vu21 in FIG. 10) while the flexible fuel amount F is increasing, the diagnostic device 1 increases the flexible fuel amount F until a predetermined waiting time T9 elapses. When the waiting time T7 elapses, the flexible fuel amount F is decreased by a skip amount K6 irrespective of the signal of the downstream oxygen sensor 113, and then the flexible fuel amount F is decreased at a predetermined time change rate ω6. In the example shown in FIG. 10, the skip amount K5 and the time change rate ω5 are equal to the skip amount K6 and the time change rate ω6, respectively, and the waiting time T8 is longer than the waiting time T9.

At least one of the waiting time T9, the time change rate ω5 of increase, or the skip amount K5 is changed in accordance with the mixture ratio of the flexible fuel estimated or detected by the diagnostic device 1. In addition to the at least one of the waiting time T9, the time change rate ω5, or the skip amount K5, at least one of the waiting time T8, the time change rate ω6, or the skip amount K6 may be changed in accordance with the mixture ratio of the flexible fuel estimated or detected by the diagnostic device 1.

In the graph of the flexible fuel amount F shown in FIG. 10, the area Ad2 of a hatched region indicates an integral value of a decreasing amount of the flexible fuel amount F until the flexible fuel amount F is increased after the value Vu of the signal of the upstream oxygen sensor 112 reaches the lean determination threshold VL (e.g., the value Vu22). In the graph of the flexible fuel amount F shown in FIG. 10, the area Ai2 of a hatched region indicates an integral value of an increasing amount of the flexible fuel amount F until the flexible fuel amount F is decreased after the signal of the upstream oxygen sensor 112 reaches the rich determination threshold VR (Vu21). The area Ad2 is larger than the area Ai2. At least the area Ai2 among the areas Ad2 and Ai2 is changed in accordance with the mixture ratio of the flexible fuel estimated or detected by the diagnostic device 1. According to the Eighth Embodiment, the largest area Ai2 is larger than the area Ai1 of the Seventh Embodiment.

In the Eighth Embodiment, for the same reason as in the Seventh Embodiment, the integral value (area Ad2) of the decreasing amount of the flexible fuel amount F until the flexible fuel amount F is increased after the value Vu of the signal of the upstream oxygen sensor 112 reaches the lean determination threshold VL is preferably larger than the integral value (area Ai2) of the increasing amount of the flexible fuel amount F until the flexible fuel amount F is decreased after the value Vu of the signal of the upstream oxygen sensor 112 reaches the rich determination threshold VR. In the Eighth Embodiment, however, the magnitude relationship between the integral values may be different from this. In the example of FIG. 10, the above-described magnitude relationship between the integral values is achieved in such a way that the skip amount K5 and the time change rate ω5 are arranged to be equal to the skip amount K6 and the time change rate ω6, respectively, and the waiting time T8 is arranged to be longer than the waiting time T9. However, the method of achieving this magnitude relationship is not limited to this.

### <Ninth Embodiment>

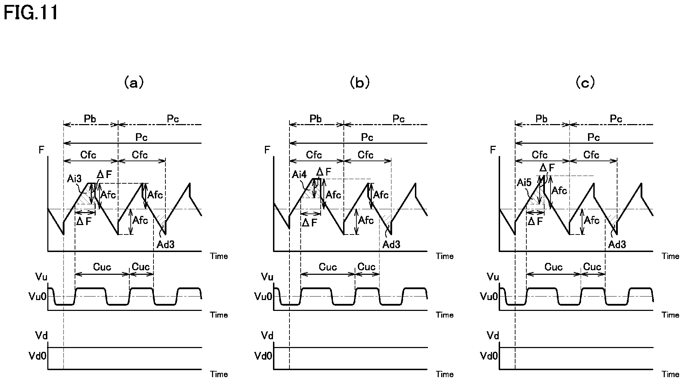

The following will describe a catalyst deterioration diagnostic device 1 (hereinafter, a diagnostic device 1) for a flexible fuel engine of the Ninth Embodiment of the present teaching with reference to FIG. 11(a), FIG. 11(b), and FIG. 11(c). The diagnostic device 1 of the Ninth Embodiment may or may not have the features of Second Embodiment. The diagnostic device 1 of the Ninth Embodiment has the features of the Third Embodiment. That is to say, the diagnostic device 1 of the Ninth Embodiment sets the cycle Cfc and the amplitude Afc of increase and decrease of the flexible fuel amount F in the diagnosis period Pc without being based on the signal of the downstream oxygen sensor 113 but based on at least the signal of the upstream oxygen sensor 112 and the mixture ratio of the flexible fuel. The diagnostic device 1 of the Ninth Embodiment may or may not have the features of the Fifth Embodiment. The Ninth Embodiment may be combined with the features of the Eighth Embodiment. FIG. 11(a), FIG. 11(b), and FIG. 11(c) show three examples of control of a flexible fuel amount F by the diagnostic device 1 of the Ninth Embodiment. Each of FIG. 11(a), FIG. 11(b), and FIG. 11(c) shows an example of control of a flexible fuel amount F by a diagnostic device 1 of the later-described Tenth Embodiment. Each of FIG. 11(a), FIG. 11(b), and FIG. 11(c) shows an example of changes over time of a flexible fuel amount F, a value Vu of a signal of an upstream oxygen sensor 112, and a value Vd of a signal of a downstream oxygen sensor 113 during part of a diagnosis period Pc of the Ninth Embodiment or a later-described diagnosis preparation period Pb and part of a diagnosis period Pc of the Tenth Embodiment. The part of the diagnosis period Pc includes the start point of the diagnosis period Pc. FIG. 11(a), FIG. 11(b), and FIG. 11(c) show examples in each of which the catalyst 111 is normal.

In the graphs of the flexible fuel amount F shown in FIG. 11(a), FIG. 11(b), and FIG. 11(c), the areas Ai3, Ai4, and Ai5 of hatched regions indicate integral values of increasing amounts of the flexible fuel amount F from the time point at which the signal of the upstream oxygen sensor 112 is reversed from the lean state to the rich state. In the graphs of the flexible fuel amount F shown in FIG. 11(a), FIG. 11(b), and FIG. 11(c), the area Ad3 of a hatched region indicates an integral value of a decreasing amount of the flexible fuel amount F from the time point at which the signal of the upstream oxygen sensor 112 is reversed from the rich state to the lean state.

The diagnostic device 1 of the Ninth Embodiment sets a cycle Cfc and an amplitude Afc of increase and decrease of the flexible fuel amount F in the diagnosis period Pc so that the integral value (area Ai3, Ai4, Ai5) of the increasing amount of the flexible fuel amount F from the time point at which the signal of the upstream oxygen sensor 112 is reversed from the lean state to the rich state in at least a period including the first cycle of the signal of the upstream oxygen sensor 112 in the diagnosis period Pc is larger than the integral value (area Ad3) of the decreasing amount of the flexible fuel amount F from the time point at which the signal of the upstream oxygen sensor 112 is reversed from the rich state to the lean state in the diagnosis period Pc.

### <Tenth Embodiment>

The following will describe a catalyst deterioration diagnostic device 1 (hereinafter, a diagnostic device 1) for a flexible fuel engine of the Tenth Embodiment of the present teaching with reference to FIG. 11(a), FIG. 11(b), and FIG. 11(c). The diagnostic device 1 of the Tenth Embodiment may or may not have the features of the Second Embodiment. The diagnostic device 1 of the Tenth Embodiment has the features of the Third Embodiment or Fourth Embodiment. When including the features of the Third Embodiment, the diagnostic device 1 of the Tenth Embodiment may or may not have the features of the Ninth Embodiment. The Tenth Embodiment may be combined with the features of the Seventh Embodiment or Eighth Embodiment. In this case, a diagnosis preparation period Pb is set after a threshold changing period Pd.

The diagnostic device 1 of the Tenth Embodiment sets an increasing time ΔT and an increasing amount ΔF of the flexible fuel amount F from the time point at which the signal of the upstream oxygen sensor 112 is reversed from the lean state to the rich state in the diagnosis preparation period Pb and a cycle Cfc and an amplitude Afc of increase and decrease of the flexible fuel amount F in the diagnosis period Pc so that an integral value (area Ai3, Ai4, Ai5) of an increasing amount of the flexible fuel amount F from the time point at which the signal of the upstream oxygen sensor 112 is reversed from the lean state to the rich state in the diagnosis preparation period Pb before the diagnosis period Pc is larger than the integral value (area Ad3) of the decreasing amount of the flexible fuel amount F from the time point at which the signal of the upstream oxygen sensor 112 is reversed from the rich state to the lean state in the diagnosis period Pc.

### <Eleventh Embodiment>

The following will describe a catalyst deterioration diagnostic device 1 (hereinafter, a diagnostic device 1) for a flexible fuel engine of the Eleventh Embodiment of the present teaching. The diagnostic device 1 of the Eleventh Embodiment may or may not have the features of the Second Embodiment. The diagnostic device 1 of the Eleventh Embodiment has the features of the Third Embodiment. The diagnostic device 1 of the Eleventh Embodiment has the features of the Fifth Embodiment. The diagnostic device 1 of the Eleventh Embodiment may or may not have the features of the Ninth Embodiment.

### [Reference Signs List]

1: catalyst deterioration diagnostic device for flexible fuel engine, 100: flexible fuel engine, 110: flexible fuel supplier, 111: catalyst, 112: upstream oxygen sensor, 113: downstream oxygen sensor, Adc: amplitude of signal of downstream oxygen sensor in diagnosis period, Afc: amplitude of increase and decrease of flexible fuel amount in diagnosis period, Cdc: cycle of signal of downstream oxygen sensor in diagnosis period, Cfc: cycle of increase and decrease of flexible fuel amount in diagnosis period, Cuc: cycle of signal of upstream oxygen sensor in diagnosis period, Fb1: maximum value, Fc1: maximum value, Pb: diagnosis preparation period, Pc: diagnosis period, Pd: threshold changing period, Pt: total diagnosis period, R: concentration detection range, Va: first limit value, Vb: second limit value, VL: lean determination threshold, VR: rich determination threshold, ΔF: increasing amount, ΔT: increasing time

## Claims

1. A catalyst deterioration diagnostic device for a flexible fuel engine which is configured to combust flexible fuel and includes:
a flexible fuel supplier which is configured to supply the flexible fuel having different mixture ratios, in which gasoline and alcohol are mixed at different ratios;
a catalyst which is configured to purify exhaust gas generated by combustion of the supplied flexible fuel;
a front sensor which is configured to detect a state of the exhaust gas before passing through the catalyst; and
a rear sensor which is configured to detect a state of the exhaust gas after passing through the catalyst,
the catalyst deterioration diagnostic device comprising a processor which is configured to perform a diagnosis process of diagnosing a state of deterioration of the catalyst based on at least a signal of the rear sensor,
the front sensor being an upstream oxygen sensor which is configured to output a signal which is reversed between a rich state and a lean state indicating that oxygen concentration is higher than the oxygen concentration in the rich state, in accordance with increase and decrease of the oxygen concentration in the exhaust gas before passing through the catalyst,
the rear sensor being a downstream oxygen sensor which is configured to output a signal which is reversed between a first state and a second state in which the oxygen concentration is higher than the oxygen concentration in the first state, when the oxygen concentration in the exhaust gas after passing through the catalyst increases and decreases in such a way that a state in which the oxygen concentration is lower than a predetermined range and a state in which the oxygen concentration is higher than the predetermined range are repeatedly alternated, and
the catalyst deterioration diagnostic device configured to
(A) control the flexible fuel supplier by setting a cycle and amplitude of increase and decrease of a flexible fuel amount in a diagnosis period, either (I) without being based on the signal of the downstream oxygen sensor but based on at least the signal of the upstream oxygen sensor and the mixture ratio of the flexible fuel or (II) based on at least the signal of the upstream oxygen sensor and the signal of the downstream oxygen sensor, such that,
in a period that is a combination of multiple diagnosis periods,
(a) the signal of the downstream oxygen sensor when the catalyst is deteriorated is reversed multiple times irrespective of (1) a difference in a mixture ratio of the flexible fuel and (2) a difference in magnitude of at least one of a cycle or an amplitude of the signal of the downstream oxygen sensor due to the difference in the mixture ratio of the flexible fuel, and
(b) the signal of the downstream oxygen sensor when the catalyst is normal (i) is maintained in the first state without being reversed to the second state or (ii) is reversed at least once with at least one of a cycle that is large or an amplitude that is small compared to the signal of the downstream oxygen sensor when the catalyst is deteriorated, irrespective of the mixture ratio of the flexible fuel,
the diagnosis period having a length equal to or longer than one cycle of the signal of the upstream oxygen sensor during execution of the diagnosis process and having a length that allows that one driving cycle includes multiple diagnosis periods,
(B) generate a single set of diagnostic data based on the signal of the downstream oxygen sensor in the diagnosis period, (B 1) even when at least one of the cycle or amplitude of the signal of the downstream oxygen sensor in the diagnosis period is different due to a difference in the mixture ratio of the flexible fuel, (B2) even when the number of reversals of the signal of the downstream oxygen sensor in the diagnosis period is smaller than the number of reversals of the signal of the upstream oxygen sensor in the diagnosis period, when the catalyst is deteriorated, and (B3) even when the signal of the downstream oxygen sensor is reversed in the diagnosis period when the catalyst is normal, and
(C) diagnose the state of deterioration of the catalyst based on at least one set of the diagnostic data generated based on the signal of the downstream oxygen sensor in a total diagnosis period which includes at least one diagnosis period, which has a length equal to or longer than any two cycles of the signal of the upstream oxygen sensor, and to which features of the respective signals of the downstream oxygen sensor when the catalyst is normal and when the catalyst is deteriorated are reflected, (C1) even when at least one of the cycle or amplitude of the signal of the downstream oxygen sensor in the diagnosis period is different due to a difference in the mixture ratio of the flexible fuel, (C2) even when the number of reversals of the signal of the downstream oxygen sensor in the diagnosis period is smaller than the number of reversals of the signal of the upstream oxygen sensor in the diagnosis period, when the catalyst is deteriorated, and (C3) even when the signal of the downstream oxygen sensor is reversed in the diagnosis period when the catalyst is normal.

2. The catalyst deterioration diagnostic device according to claim 1, wherein,
the catalyst deterioration diagnostic device is configured to control the flexible fuel supplier by setting the cycle and amplitude of increase and decrease of the flexible fuel amount in the diagnosis period to be larger than at least one of the cycle or amplitude of increase and decrease of the flexible fuel amount in a period which is without execution of the diagnosis process and in which the mixture ratio of the flexible fuel is equal to the mixture ratio of the flexible fuel in this diagnosis period, either (I) without being based on the signal of the downstream oxygen sensor but based on at least the signal of the upstream oxygen sensor and the mixture ratio of the flexible fuel or (II) based on at least the signal of the upstream oxygen sensor and the signal of the downstream oxygen sensor.

3. The catalyst deterioration diagnostic device according to claim 1 or 2, wherein,
when the signal of the downstream oxygen sensor is in the second state at a time point at which the signal of the upstream oxygen sensor is reversed from the lean state to the rich state while the supplied flexible fuel amount is increasing in the diagnosis period, the catalyst deterioration diagnostic device controls the flexible fuel supplier by setting the cycle and amplitude of increase and decrease of the flexible fuel amount in the diagnosis period, based on at least the signal of the upstream oxygen sensor and the signal of the downstream oxygen sensor so that decrease of the supplied flexible fuel amount is avoided until the signal of the downstream oxygen sensor is reversed from the second state to the first state.

4. The catalyst deterioration diagnostic device according to claim 3, wherein,
when the signal of the downstream oxygen sensor is in the second state at a time point at which the signal of the upstream oxygen sensor is reversed from the lean state to the rich state while the supplied flexible fuel amount is increasing in a diagnosis preparation period prior to the diagnosis period, the catalyst deterioration diagnostic device controls the flexible fuel supplier by setting an increasing time and an increasing amount of the flexible fuel amount from the time point at which the signal of the upstream oxygen sensor is reversed from the lean state to the rich state in the diagnosis preparation period, based on at least the signal of the upstream oxygen sensor and the signal of the downstream oxygen sensor so that decrease of the supplied flexible fuel amount is avoided until the signal of the downstream oxygen sensor is reversed from the second state to the first state.

5. The catalyst deterioration diagnostic device according to claim 4, wherein,
the catalyst deterioration diagnostic device controls the flexible fuel supplier by setting the increasing time and the increasing amount of the flexible fuel amount from the time point at which the signal of the upstream oxygen sensor is reversed from the lean state to the rich state in the diagnosis preparation period and the cycle and amplitude of increase and decrease of the flexible fuel amount in the diagnosis period, based on at least the signal of the upstream oxygen sensor and the signal of the downstream oxygen sensor so that the maximum value of the supplied flexible fuel amount in the diagnosis preparation period is larger than the maximum value of the supplied flexible fuel amount in the diagnosis period.

6. The catalyst deterioration diagnostic device according to any one of claims 1 to 3, wherein,
the upstream oxygen sensor is configured to output a signal having a value equal to a first limit value when the oxygen concentration in the exhaust gas before passing through the catalyst is lower than a predetermined concentration detection range, to output a signal having a value equal to a second limit value when the oxygen concentration in the exhaust gas before passing through the catalyst is higher than the concentration detection range, and to output a signal continuously changing between the first limit value and the second limit value in accordance with the oxygen concentration when the oxygen concentration in the exhaust gas before passing through the catalyst falls within the concentration detection range,
the catalyst deterioration diagnostic device is configured to
(a) determine a timing to decrease the supplied flexible fuel amount at least with reference to a time point at which the signal of the upstream oxygen sensor reaches a rich determination threshold in the concentration detection range,
(b) determine a timing to increase the supplied flexible fuel amount at least with reference to a time point at which the signal of the upstream oxygen sensor reaches a lean determination threshold indicating oxygen concentration that falls within the concentration detection range and is equal to or higher than the rich determination threshold,
(c) change the rich determination threshold and the lean determination threshold to be closer to the first limit value in a threshold changing period before the diagnosis period, until the downstream oxygen sensor outputs a signal in the first state, and
(d) control the flexible fuel supplier by setting the cycle and amplitude of increase and decrease of the flexible fuel amount in the diagnosis period, either (I) without being based on the signal of the downstream oxygen sensor but based on at least the signal of the upstream oxygen sensor and the mixture ratio of the flexible fuel or (II) based on at least the signal of the upstream oxygen sensor and the signal of the downstream oxygen sensor.

7. The catalyst deterioration diagnostic device according to claim 1 or 2, wherein,
the catalyst deterioration diagnostic device is configured to control the flexible fuel supplier by setting the cycle and amplitude of increase and decrease of the flexible fuel amount in at least the diagnosis period among the diagnosis period and a diagnosis preparation period prior to the diagnosis period, without being based on the signal of the downstream oxygen sensor but based on at least the signal of the upstream oxygen sensor and the mixture ratio of the flexible fuel so that an integral value of an increasing amount of the flexible fuel amount from a time point at which the signal of the upstream oxygen sensor is reversed from the lean state to the rich state in at least one of the diagnosis preparation period or a period including the first cycle of the signal of the upstream oxygen sensor in the diagnosis period is larger than an integral value of a decreasing amount of the flexible fuel amount from a time point at which the signal of the upstream oxygen sensor is reversed from the rich state to the lean state in the diagnosis period.

8. The catalyst deterioration diagnostic device according to claim 1 or 2, wherein,
when the signal of the downstream oxygen sensor is in the second state at a time point at which the signal of the upstream oxygen sensor is reversed from the lean state to the rich state while the supplied flexible fuel amount is increasing in a diagnosis preparation period prior to the diagnosis period, the catalyst deterioration diagnostic device
(a) controls the flexible fuel supplier by setting an increasing time and an increasing amount of the flexible fuel amount from the time point at which the signal of the upstream oxygen sensor is reversed from the lean state to the rich state in the diagnosis preparation period, based on at least the signal of the upstream oxygen sensor and the signal of the downstream oxygen sensor so that decrease of the supplied flexible fuel amount is avoided until the signal of the downstream oxygen sensor is reversed from the second state to the first state, and
(b) controls the flexible fuel supplier by setting the cycle and amplitude of increase and decrease of the flexible fuel amount in the diagnosis period after the diagnosis preparation period, without being based on the signal of the downstream oxygen sensor but based on at least the signal of the upstream oxygen sensor and the mixture ratio of the flexible fuel.

9. The catalyst deterioration diagnostic device according to any one of claims 1 to 3, wherein,
the catalyst deterioration diagnostic device
(a) controls the flexible fuel supplier by setting an increasing time and an increasing amount of the flexible fuel amount from a time point at which the signal of the upstream oxygen sensor is reversed from the lean state to the rich state in a diagnosis preparation period prior to the diagnosis period, without being based on the signal of the downstream oxygen sensor but based on at least the signal of the upstream oxygen sensor and the signal of the mixture ratio of the flexible fuel so that an integral value of an increasing amount of the flexible fuel amount from the time point at which the signal of the upstream oxygen sensor is reversed from the lean state to the rich state in the diagnosis preparation period is larger than an integral value of a decreasing amount of the flexible fuel amount from a time point at which the signal of the upstream oxygen sensor is reversed from the rich state to the lean state in the diagnosis period after the diagnosis preparation period, and
(b) controls the flexible fuel supplier by setting the cycle and amplitude of increase and decrease of the flexible fuel amount in the diagnosis period after the diagnosis preparation period based on at least the signal of the upstream oxygen sensor and the signal of the downstream oxygen sensor.

10. The catalyst deterioration diagnostic device according to any one of claims 1 to 9, wherein,
the catalyst deterioration diagnostic device is configured to generate the single set of diagnostic data based on sets of data per unit period of the signal of the downstream oxygen sensor, which are obtained in the diagnosis period, (i) even when at least one of the cycle or amplitude of the signal of the downstream oxygen sensor in the diagnosis period is different due to a difference in the mixture ratio of the flexible fuel, (ii) even when the number of reversals of the signal of the downstream oxygen sensor in the diagnosis period is smaller than the number of reversals of the signal of the upstream oxygen sensor in the diagnosis period, when the catalyst is deteriorated, and (iii) even when the signal of the downstream oxygen sensor is reversed in the diagnosis period when the catalyst is normal.

11. The catalyst deterioration diagnostic device according to claim 10, wherein,
the catalyst deterioration diagnostic device is configured to generate the single set of diagnostic data reflecting multiple types of feature quantities regarding a change of the signal of the downstream oxygen sensor in the diagnosis period, based on the sets of data per unit period of the signal of the downstream oxygen sensor, which are obtained in the diagnosis period, (i) even when at least one of the cycle or amplitude of the signal of the downstream oxygen sensor in the diagnosis period is different due to a difference in the mixture ratio of the flexible fuel, (ii) even when the number of reversals of the signal of the downstream oxygen sensor in the diagnosis period is smaller than the number of reversals of the signal of the upstream oxygen sensor in the diagnosis period, when the catalyst is deteriorated, and (iii) even when the signal of the downstream oxygen sensor is reversed in the diagnosis period when the catalyst is normal.

12. The catalyst deterioration diagnostic device according to claim 11, wherein,
the catalyst deterioration diagnostic device is configured to generate the single set of diagnostic data regarding a Mahalanobis' distance based on a Mahalanobis-Taguchi Method, and reflecting the multiple types of feature quantities regarding a change of the signal of the downstream oxygen sensor in the diagnosis period, based on the sets of data per unit period of the signal of the downstream oxygen sensor, which are obtained in the diagnosis period, (i) even when at least one of the cycle or amplitude of the signal of the downstream oxygen sensor in the diagnosis period is different due to a difference in the mixture ratio of the flexible fuel, (ii) even when the number of reversals of the signal of the downstream oxygen sensor in the diagnosis period is smaller than the number of reversals of the signal of the upstream oxygen sensor in the diagnosis period, when the catalyst is deteriorated, and (iii) even when the signal of the downstream oxygen sensor is reversed in the diagnosis period when the catalyst is normal.
